# FASCICULE DE BREVET EUROPEEN

(11) **EP 1 371 251 B1**
(45) Date de publication et mention de la délivrance du brevet: **22.10.2008**
(21) Numéro de dépôt: 02720074.0
(22) Date de dépôt: 22.03.2002
(51) Int. Cl.: H04Q 7/32

(54) **MODULE DE RADIOCOMMUNICATION HEBERGEANT ET EXECUTANT UN LOGICIEL CLIENT, ET PROCEDE CORRESPONDANT DE MISE EN OEUVRE D'UN LOGICIEL CLIENT DE PILOTAGE**
FUNKKOMMUNIKATIONSMODUL, DER EINE CLIENTSOFTWARE BEHERBERGT UND AUSFÜHRT, SOWIE IMPLEMENTIERUNGSVERFAHREN ZUR DÜRCHFUHRUNG EINER TREIBER-CLIENTSOFTWARE
RADIOCOMMUNICATION MODULE HOSTING AND EXECUTING A CLIENT SOFTWARE, AND CORRESPONDING METHOD FOR IMPLEMENTING A DRIVING CLIENT SOFTWARE

(30) Priorité: 22.03.2001 FR 0103909
(43) Date de publication de la demande: 17.12.2003
(73) Titulaire: Wavecom SA, 92442 Issy-les-Moulineaux Cedex (FR)
(72) Inventeur: MONTES, Jacques, F-94130 Nogent sur Marne (FR)
(74) Mandataire: Vidon, Patrice
(86) Numéro de dépôt international: PCT/FR2002/001024
(87) Numéro de publication internationale: WO 2002/078375

(56) Documents cités:
- WO-A-00/33538
- WO-A-99/63767
- FR-A- 2 775 550

## Description

Le domaine de l'invention est celui des systèmes de radiocommunication notamment, mais non exclusivement, selon le standard GSM (pour "Global System for Mobile communications" en anglais), DCS 1800 (pour "Digital Cellular System 1800 MHz" en anglais), PCS 1900 (pour "Personal Communication System" en anglais), GPRS (pour "General Packet Radio service"), ou encore UMTS (pour "Universal Mobile Télécommunication System" en anglais).

Plus précisément, l'invention concerne un module de radiocommunication. On rappelle que le module de radiocommunication est un élément essentiel d'un radiotéléphone. Il héberge et exécute un logiciel principal (communément appelé "logiciel de radiocommunication" ou "logiciel GSM") qui assure notamment des fonctions de communication sans fil (radiocommunication) et pilote divers éléments matériels (écran, clavier, haut-parleur, ...) du radiotéléphone.

Habituellement (première application), le module de radiocommunication est compris dans un terminal (ou ME, pour "Mobile Equipment" en anglais) qui coopère avec une carte SIM (pour "Subscriber Identity Module" en anglais, ou module d'identification d'abonné).

A titre d'exemple de cette première application, le brevet FR 2 775 550 propose une technique permettant d'utiliser un radiotéléphone, comprenant un terminal coopérant avec une carte SIM; de manière à exécuter un programme de jeu. Selon l'invention, le programme de jeu est chargé dans une mémoire de la carte SIM et exécuté (off-line) par le terminal, après avoir été interprété par un interpréteur compris dans la carte SIM.

Il est également proposé, dans le brevet WO 99 36767, une technique permettant à un utilisateur de charger, par exemple via des messages SMS, un service, sous la forme d'une structure de données de service, sur une carte SIM coopérant avec un terminal. Un interpréteur compris dans la carte SIM permet d'interpréter le contenu de cette structure de données de service, afin d'en déduire le service à offrir.

D'autres applications ont d'ores et déjà été envisagées pour le module de radiocommunication précité.

Il a notamment été proposé (seconde application) d'intégrer le module de radiocommunication dans des dispositifs autres que des terminaux de radiocommunication, mais nécessitant néanmoins une fonctionnalité de communication sans fil. A titre d'exemple, on peut citer des dispositifs de télémétrie (relevés de compteur), des dispositifs d'alarme ou encore des dispositifs lecteur de cartes bancaires.

Il a également été proposé (troisième application) de fournir le module de radiocommunication sous forme indépendante : il est alors qualifié de modem. Un tel modem ne comprend aucun élément matériel (écran, clavier, haut-parleur, ...) d'interface homme/machine. Il est destiné à coopérer avec un équipement tiers (supportant un logiciel client), qui lui possède des éléments matériel d'interface homme/machine. L'équipement tiers peut notamment, mais non exclusivement, être un micro-ordinateur. D'une façon générale, l'équipement tiers héberge et exécute un logiciel client de pilotage, permettant de piloter (c'est-à-dire de commander) le module de radiocommunication, grâce à un jeu de commandes de pilotage au format AT. Les commandes AT (pour "ATtention command" en anglais) permettent à l'équipement tiers (ou TE pour "Terminal Equipment") d'exiger du terminal de radiocommunication auquel il est relié d'exécuter certaines actions prédéterminées. A cet effet, le logiciel principal (hébergé par le module de radiocommunication) comprend des moyens d'exécution des commandes AT, qui lui sont envoyées par le logiciel client de pilotage (hébergé par l'équipement tiers).

Pour plus de précisions concernant les commandes AT, on pourra se reporter d'une part aux normes "GSM 07.05" et "GSM 07.07" de l'ETSI et d'autre part à la recommandation V25ter de l'ITU-T, qui sont insérées ici par référence.

D'une façon générale, le pilotage du module de radiocommunication par un équipement tiers, grâce aux commandes AT, ne s'applique pas uniquement dans le cadre de la troisième application précitée (module de radiocommunication formant modem), mais aussi dans le cadre des première et seconde application précitées (module de radiocommunication compris dans un terminal de radiocommunication ou un autre dispositif).

En d'autres termes, quelle que soit l'application envisagée, le module de radiocommunication peut être piloté par un équipement tiers avec lequel il coopère (généralement via une liaison série). Dans ce cas, un logiciel client de pilotage (comprenant une "application cliente externe"), hébergé et exécuté par l'équipement tiers, envoie des commandes AT à un logiciel principal, hébergé et exécuté par le module de radiocommunication, en vue de leur exécution par ce dernier.

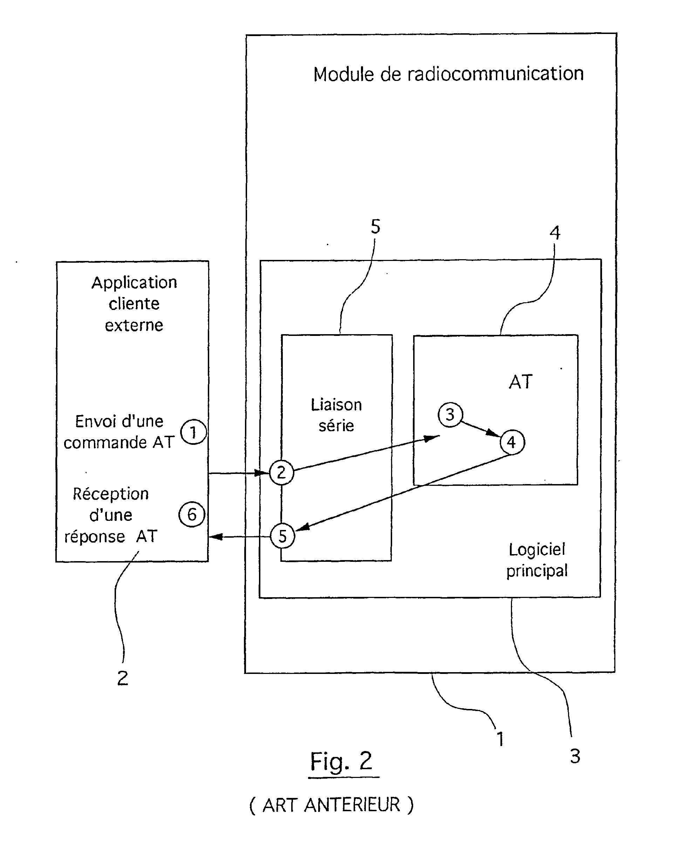

Comme illustré sur la figure 2, le fonctionnement de la technique actuelle de pilotage d'un module de radiocommunication par un équipement tiers peut être résumé ainsi:
- étape "1" : l'application cliente externe (logiciel client de pilotage) 2 envoie une commande AT ;
- étape "2" : la liaison série 5 transmet la commande AT aux moyens 4 d'exécution des commandes AT compris dans le logiciel principal 3 hébergé et exécuté par le module de radiocommunication 1 ;
- étape "3" : les moyens 4 d'exécution exécutent la commande AT ;
- étape "4" : après exécution, les moyens d'exécution 4 envoient une réponse AT à l'application cliente externe 2 ;
- étape "5" : cette réponse est envoyée à travers la liaison série 5 ;
- étape "6" : l'application cliente externe 2 reçoit la réponse.

Chacune de ces étapes est illustrée sur la figure 2 par un cercle dans lequel est inscrit le numéro de l'étape concernée. La même convention est adoptée dans les figures suivantes relatives à la présente invention (et qui sont décrites en détail dans la suite de la description).

La technique actuelle de pilotage d'un module de radiocommunication par un équipement tiers présente plusieurs inconvénients.

Tout d'abord, elle nécessite un double jeu de ressources (processeur et mémoire). En effet, le module de radiocommunication comprend un processeur et une mémoire (premier jeu de ressources) et l'équipement tiers dispose également d'un processeur et d'une mémoire (second jeu de ressources). La technique actuelle précitée est donc coûteuse en terme de matériel et de consommation énergétique.

Un autre inconvénient de la technique actuelle précitée est que le module de radiocommunication subit entièrement le pilotage effectué par l'équipement tiers. En effet, le logiciel client de pilotage, hébergé et exécuté par l'équipement tiers, est le "maître", tandis que le logiciel principal, hébergé et exécuté par le module de radiocommunication, est l"'esclave".

L'invention a notamment pour objectif de pallier ces inconvénients de l'état de la technique.

Plus précisément, l'un des objectifs de la présente invention est de fournir une technique de pilotage d'un module de radiocommunication, du type mettant en oeuvre un logiciel client de pilotage, qui soit simple et peu coûteuse (en terme de matériel et de consommation énergétique).

L'invention a également pour objectif de fournir une telle technique de pilotage permettait au module de radiocommunication, lorsque le pilotage est effectué par un équipement tiers, de pouvoir superviser (y inclus agir sur) le déroulement de ce pilotage. En d'autres termes, on souhaite que le module de radiocommunication ne joue pas uniquement un rôle d'esclave.

Ces différents objectifs, ainsi que d'autres qui apparaîtront par la suite, sont atteints selon l'invention à l'aide d'un module de radiocommunication, du type hébergeant et exécutant un logiciel principal assurant des fonctions de radiocommunication, ledit logiciel principal comprenant des moyens d'exécution de commandes de pilotage, envoyées au logiciel principal par au moins un logiciel client de pilotage et appartenant à un jeu de commandes de pilotage prédéterminé. Selon l'invention, le module de radiocommunication est adapté à héberger et exécuter en outre au moins un logiciel client, dit logiciel client embarqué. En outre, le logiciel client embarqué et le logiciel principal comprennent des moyens permettant au logiciel client embarqué de jouer au moins un des deux rôles suivants :
- le rôle d'un logiciel client de pilotage, comprenant des moyens pour envoyer des commandes de pilotage au logiciel principal, et recevant du logiciel principal des réponses, résultant de l'exécution de certaines des commandes de pilotage ;
- le rôle d'un logiciel client de supervision, comprenant des moyens pour gérer l'exécution de commandes de pilotage envoyées par un logiciel client de pilotage, dit logiciel client externe, hébergé et exécuté par un équipement tiers coopérant avec le module de radiocommunication.

Le principe général de l'invention consiste donc à héberger sur le module de radiocommunication au moins un logiciel client pouvant jouer le rôle d'un logiciel client de pilotage et/ou le rôle d'un logiciel client de supervision.

Ainsi, dans le cas où le logiciel client embarqué joue le rôle d'un logiciel client de pilotage, le module de radiocommunication présente un fonctionnement autonome et peu coûteux. En effet, dans ce cas, le module de radiocommunication n'a pas à coopérer avec un équipement tiers, et le logiciel principal et le logiciel client de pilotage utilisent les mêmes ressources (même processeur et même mémoire).

La présente invention permet également, dans le cas où le logiciel client embarqué joue le rôle d'un logiciel client de supervision, de ne pas limiter le module de radiocommunication à un rôle d'esclave vis-à-vis de l'équipement tiers qui exécute le logiciel client de pilotage. En effet, le logiciel client de supervision, exécuté par le module de radiocommunication, gère le pilotage demandé par le logiciel client de pilotage, exécuté par l'équipement tiers. On notera que, dans ce cas, le logiciel client embarqué est un logiciel supplémentaire par rapport à la configuration de l'état de la technique précité. Toutefois, ce logiciel supplémentaire est peu coûteux puisqu'il utilise les mêmes ressources (processeur et mémoire) que le logiciel principal également hébergé par le module de radiocommunication.

Avantageusement, pour permettre au logiciel client embarqué de jouer le rôle d'un logiciel client de supervision :
- le logiciel principal comprend des moyens d'aiguillage de commandes, en fonction d'une politique d'aiguillage de commandes déterminée, de façon à transmettre les commandes de pilotage provenant du logiciel client externe vers le logiciel client embarqué et/ou vers les moyens d'exécution compris dans le logiciel principal ;
- le logiciel client embarqué comprend des moyens de traitement des commandes de pilotage aiguillées vers lui par lesdits moyens d'aiguillage de commandes. De cette façon, le logiciel client embarqué peut :

- soit n'effectuer aucune action, les commandes étant transmises uniquement au logiciel principal, qui les exécute directement ;
- soit effectuer un filtrage des commandes qui lui sont transmises sans être exécutées par le logiciel principal. Le logiciel client embarqué peut ainsi par exemple décider, en fonction de critères déterminés, quelles commandes doivent être exécutées par le logiciel principal et quelles commandes peuvent faire l'objet d'une réponse sans exécution ;
- soit un "espionnage" des commandes dont il reçoit une copie et qui sont par ailleurs directement exécutées par le logiciel principal.

De façon avantageuse, pour permettre au logiciel client embarqué de jouer le rôle d'un logiciel client de supervision :
- le logiciel principal comprend des moyens d'aiguillage de réponses, en fonction d'une politique d'aiguillage de réponses déterminée, de façon à transmettre des réponses, résultant de l'exécution de certaines des commandes de pilotage par les moyens d'exécution compris dans le logiciel principal, vers le logiciel client embarqué et/ou vers le logiciel client externe;
- le logiciel client embarqué comprend des moyens de traitement des réponses aiguillées vers lui par lesdits moyens d'aiguillage de réponses. De cette façon, le logiciel client embarqué peut :

- soit n'effectuer aucune action, les réponses générées par le logiciel principal étant transmises uniquement au logiciel client externe ;
- soit effectuer un filtrage des réponses qui lui sont transmises sans être transmises au logiciel client externe. Le logiciel client embarqué peut ainsi par exemple décider, en fonction de critères déterminés, quelles réponses doivent être transmises au logiciel client externe (en étant ou non modifiées) et quelles réponses ne doivent pas l'être ;
- soit un "espionnage" des réponses dont il reçoit une copie et qui sont par ailleurs directement transmises au logiciel client externe.

Préférentiellement, ledit logiciel principal comprend une application principale, basée sur un jeu de fonctions d'exécution, permettant chacune l'exécution d'au moins une desdites commandes de pilotage. Le logiciel client embarqué comprend une application cliente, basée sur un jeu de fonctions sources, perntettant chacune l'envoi ou la réception, vers ou en provenance de l'application principale, de commandes de pilotage ou de réponses à des commandes de pilotage. Le logiciel principal et/ou ledit logiciel client embarqué comprend(nnent) une application d'interface, permettant l'interfaçage desdites fonctions sources avec lesdites fonctions d'exécution.

Ainsi, on limite les coûts de développement, du fait que l'application d'interface (aussi appelée par la suite "librairie d'interface application"), une fois développée, peut être utilisée avec différentes applications clientes, voire avec différents logiciel principaux.

Ceci permet un développement rapide du logiciel client embarqué, les commandes AT étant bien connues et déjà utilisées pour le développement des logiciels clients externes (hébergés par les équipements tiers). Ceci facilite également le développement d'un logiciel client fortement basé sur un logiciel client externe existant.

L'invention concerne également un procédé de mise en oeuvre d'un logiciel client de pilotage d'un module de radiocommunication, ledit module de radiocommunication étant du type hébergeant et exécutant un logiciel principal assurant des fonctions de radiocommunication, ledit logiciel principal comprenant des moyens d'exécution de commandes de pilotage, envoyées au logiciel principal par ledit logiciel client de pilotage et appartenant à un jeu de commandes de pilotage prédéterminé. Selon l'invention, ledit module de radiocommunication héberge et exécute au moins un logiciel client, dit logiciel client embarqué. Le logiciel client embarqué et le logiciel principal dialoguent l'un avec l'autre de façon que le logiciel client embarqué joue au moins un des deux rôles suivants :
- le rôle dudit logiciel client de pilotage, envoyant des commandes de pilotage au logiciel principal, et recevant du logiciel principal des réponses; résultant de l'exécution de certaines des commandes de pilotage ;
- le rôle d'un logiciel client de supervision, gérant l'exécution de commandes de pilotage envoyées par ledit logiciel client de pilotage, ledit logiciel client de pilotage, dit logiciel client externe, étant hébergé et exécuté par un équipement tiers coopérant avec le module de radiocommunication.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma simplifié d'un mode de réalisation particulier d'un module de radiocommunication selon la présente invention ;
- la figure 2 illustre le fonctionnement de la technique actuelle de pilotage d'un module de radiocommunication par un équipement tiers ;
- la figure 3 illustre le fonctionnement d'un premier mode de réalisation du module de radiocommunication selon la présente invention, dans lequel le logiciel client embarqué joue le rôle d'un logiciel client de pilotage ;
- les figures 4 à 7 illustrent chacune un mécanisme de fonctionnement d'un second mode de réalisation du module de radiocommunication selon la présente invention, dans lequel le logiciel client embarqué joue le rôle d'un logiciel client de supervision, et plus précisément :

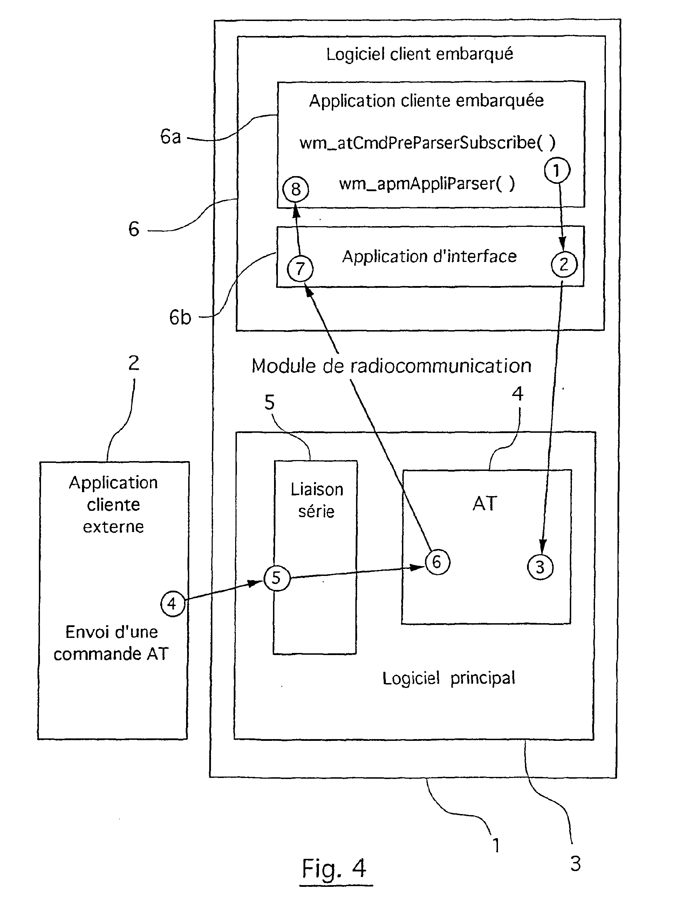

   * la figure 4 illustre un mécanisme d'aiguillage de commandes, permettant au logiciel client embarqué de filtrer les commandes provenant du logiciel client externe ;

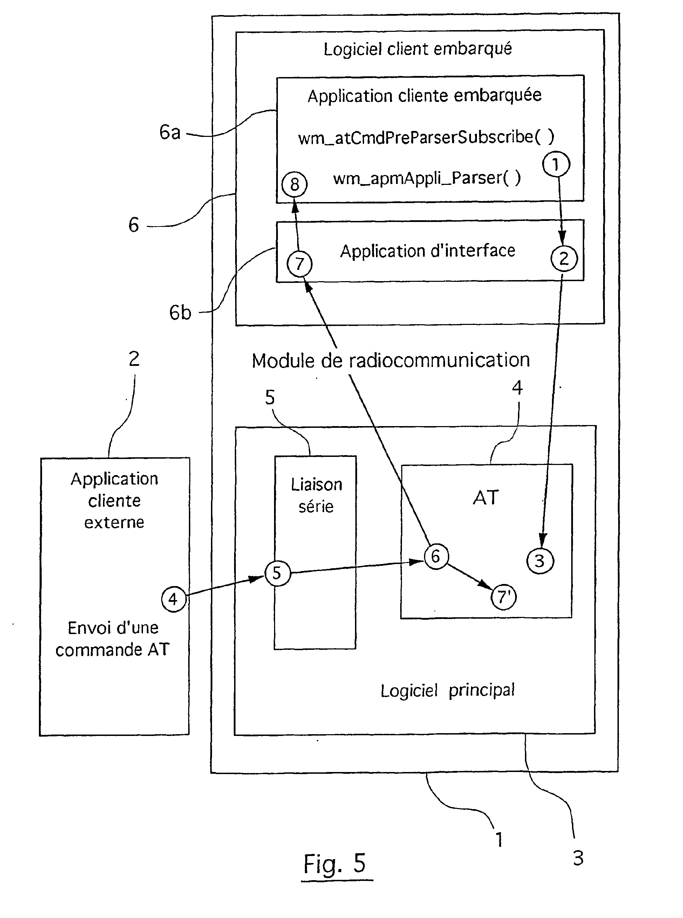

   * la figure 5 illustre une variante du mécanisme d'aiguillage de commandes de la figure 4, permettant au logiciel client embarqué d'espionner les commandes provenant du logiciel client externe ;

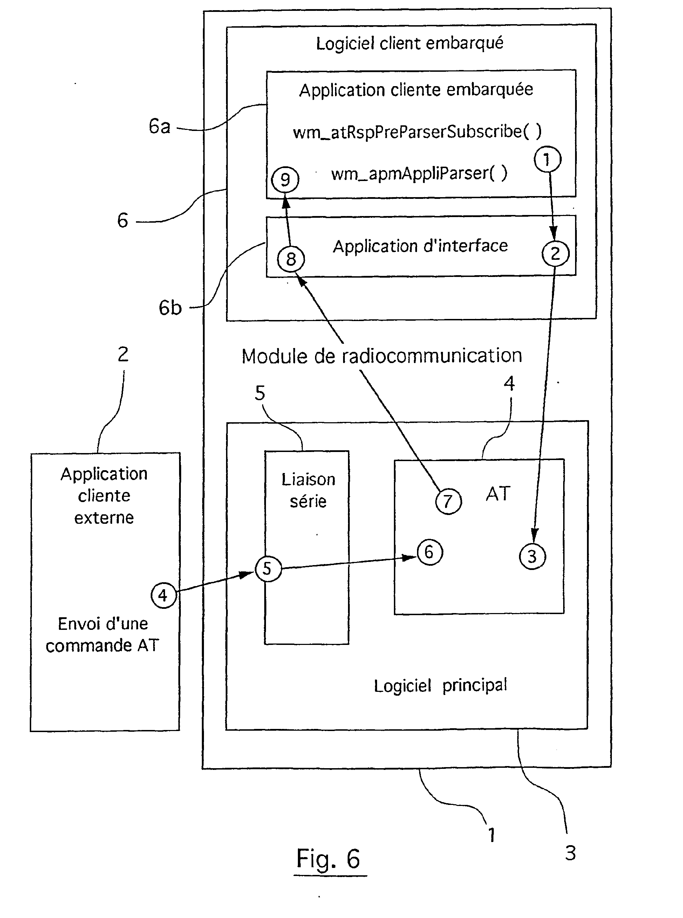

   * la figure 6 illustre le mécanisme d'aiguillage de réponses, permettant au logiciel client embarqué de filtrer les réponses destinées au logiciel client externe ;

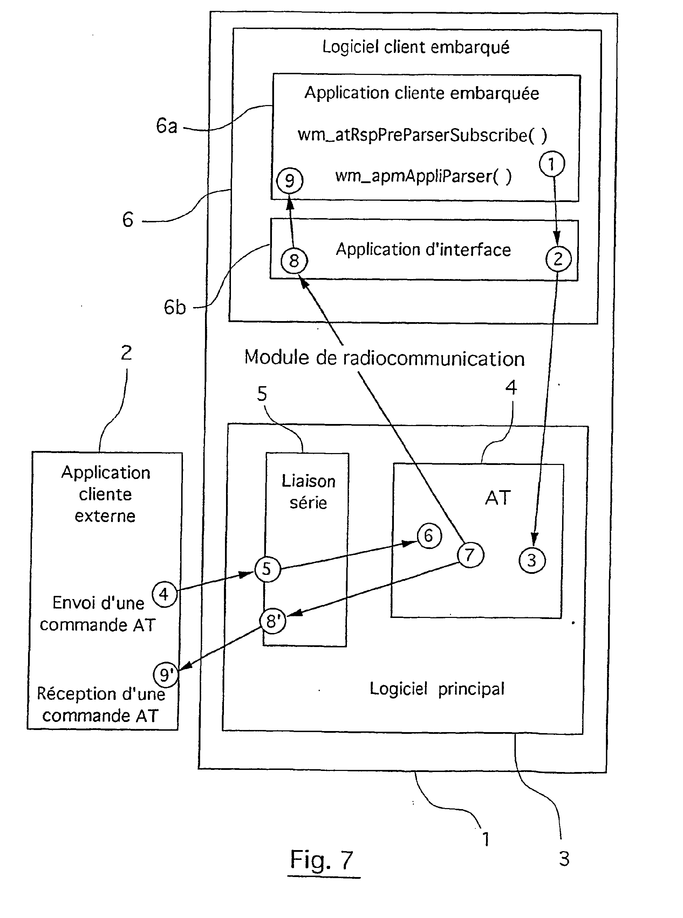

   * la figure 7 illustre une variante du mécanisme d'aiguillage de réponses de la figure 6, permettant au logiciel client embarqué d'espionner les réponses destinées au logiciel client externe.

L'invention concerne donc un module de radiocommunication hébergeant et exécutant, avec le même jeu de ressources (processeur et mémoire), un logiciel principal et (au moins) un logiciel client embarqué.

De façon classique, le logiciel principal (par exemple un "logiciel GSM") assure notamment des fonctions de radiocommunication, et comprend des moyens d'exécution de commandes de pilotage (qui lui envoyées par un logiciel client de pilotage).

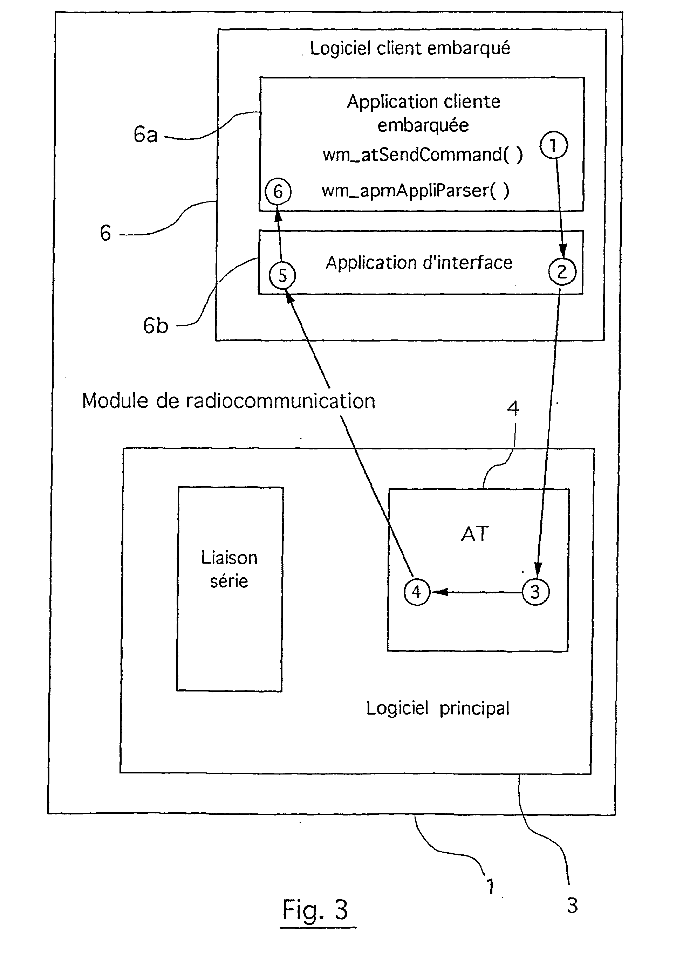

Le logiciel client embarqué (concept propre à la présente invention) peut jouer :
- le rôle d'un logiciel client de pilotage (premier mode de réalisation de invention, décrit ci-dessous en relation avec la figure 3), et/ou
- le rôle d'un logiciel client de supervision (second mode de réalisation de invention, décrit ci-dessous en relation avec les figures 4 à 7).

Dans la suite de la description, on suppose que les commandes de pilotage sont des commandes AT. Il est clair toutefois que la présente invention n'est nullement limitée à ce type de commande de pilotage:

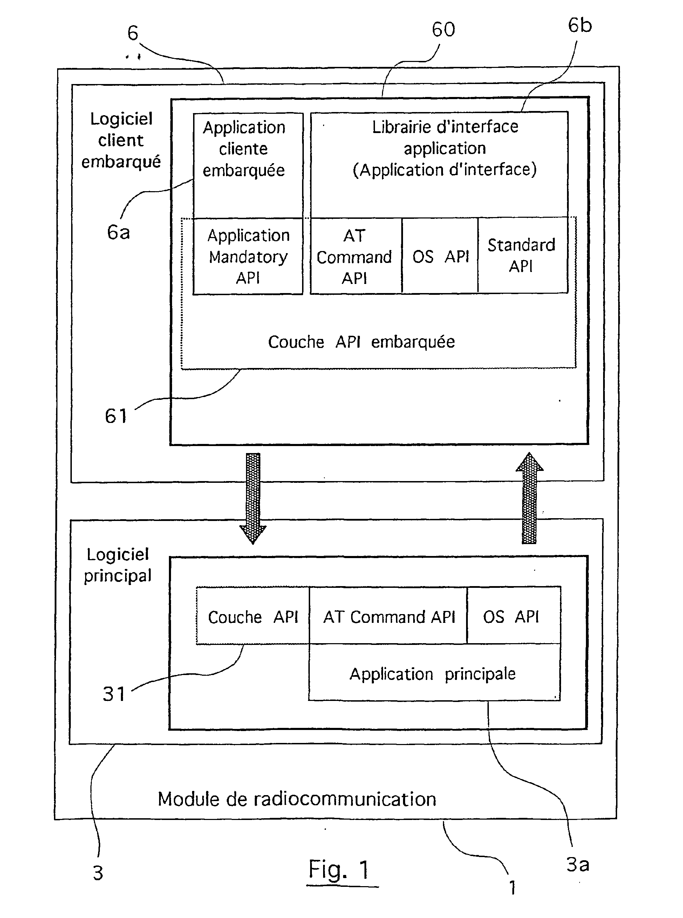

Dans le mode de réalisation particulier illustré sur la figure 1, le logiciel principal 3 comprend une application principale 3a, basée notamment sur un jeu de fonctions d'exécution, permettant chacune l'exécution d'au moins une des commandes AT.

Par ailleurs, le logiciel client embarqué 6 comprend :
- une application cliente 6a, basée notamment sur un jeu de fonctions sources, permettant chacune l'envoi ou la réception, vers ou en provenance de l'application principale 1a, de commandes AT ou de réponses à des commandes AT;
- une application d'interface 6b, permettant l'interfaçage des fonctions sources (de l'application cliente 6a) avec les fonctions d'exécution (de l'application principale 3a).

Pour communiquer l'un avec l'autre, le logiciel client embarqué 6 et le logiciel principal 3 s'appuient chacun sur une couche API, référencées 61 et 31 respectivement. On rappelle que le terme API (pour "Application Programming Interface" en anglais) désigne une interface. C'est une description des règles de communication correspondant à un certain ensemble fonctionnel.

Côté logiciel client embarqué 6, la couche API (embarquée) 61 comprend:
- dans l'application cliente embarquée 6a :
   * un bloc "Application Mandatory API", formant interface décrivant des fonctions devant être définies dans l'application cliente embarquée ;
- dans l'application d'interface (ou librairie d'interface application) 6b : les trois blocs suivants :
   * un bloc "AT command API", formant interface décrivant l'accès aux commandes AT, cette interface décrit des fonctions se trouvant dans la librairie d'interface application ;
   * un bloc "OS API", formant interface décrivant l'accès aux fonctions du système d'exploitation (Operating System), cette interface décrit des fonctions se trouvant dans la librairie d'interface application ;
   * un bloc "Standard API", formant interface décrivant l'accès à des fonctions standard, cette interface décrit des fonctions se trouvant dans la librairie d'interface application.

Côté logiciel principal 3, la couche API (exportée) 31 comprend, dans l'application principale 3a :
* un bloc " AT Command API ", pendant du bloc du même nom de la couche API (embarquée) 61 côté logiciel client embarqué 6 ;
* un bloc "OS API, pendant du bloc du même nom de la couche API (embarquée) 61 côté logiciel client embarqué 6.

L'application principale 3a constitue le noyau du logiciel principal 3, et l'application cliente 6a et l'application d'interface 6b constituent le noyau 60 du logiciel client embarqué 6.

L'application d'interface 6b est une entité logicielle qui permet le dialogue entre les deux entités logicielles autonomes (ou binaires que sont l'application cliente 6a et l'application principale 3a. Elle se présente par exemple sous la forme d'une librairie (déjà compilée).

Le logiciel client embarqué et le logiciel principal utilisent chacun une partie distincte d'une même mémoire vive (RAM). Le client définit la taille de la pile mémoire nécessaire à la bonne exécution du logiciel client embarqué. Une tentative d'accès de l'un des deux logiciels à une partie de la mémoire vive réservée à l'autre logiciel provoque un arrêt de fonctionnement.

On présente maintenant, en relation avec la figure 3, un premier mode de réalisation de invention dans lequel le logiciel client embarqué joue le rôle d'un logiciel client de pilotage.

Les éléments compris de façon classique dans un module de radiocommunication, et présentés ci-dessus en relation avec la figure 2 (art antérieur), conservent les mêmes références numériques. Ainsi, le module de radiocommunication 1 héberge et exécute un logiciel principal 3 comprenant notamment des moyens 4 d'exécution des commandes AT.

Par ailleurs, selon le premier mode de réalisation de l'invention et comme présenté ci-dessus en relation avec la figure 1, le module de radiocommunication 1 héberge et exécute en outre un logiciel client embarqué 6, jouant le rôle d'un logiciel client de pilotage et comprenant notamment une application cliente embarquée 6a et une application d'interface 6b.

Le fonctionnement de ce premier mode de réalisation de l'invention peut être résumé ainsi :
- étape "1" : l'application cliente embarquée 6a appelle une fonction source (wm_atSendCommand") d'envoi vers les moyens 4 d'exécution (compris dans le logiciel principal) d'une ou plusieurs commande(s) AT. Cette fonction source est présentée en détail dans la suite de la description ;
- étape "2" : l'application d'interface 6b appelle la ou les fonctions d'exécution appropriées au sein des moyens 4 d'exécution (compris dans le logiciel principal 3) ;
- étape "3" : les moyens 4 d'exécution exécutent la ou les commande(s) AT ;
- étape "4" : après exécution, les moyens d'exécution 4 envoient la ou les réponse(s) AT à l'application cliente embarquée 6a (si la commande d'envoi précitée a été paramétrée en ce sens) ;
- étape "5" : cette ou ces réponse(s) est(sont) expédiée(s) par l'application d'interface 6b, qui appelle, au sein de l'application cliente embarquée 6a, la fonction source ("wm_apmAppliParser") de traitement d'un message provenant du logiciel principal. Un paramètre de cette fonction source de traitement est le message qui contient la ou les réponse(s) précitée(s). Cette fonction source est présentée en détail dans la suite de la description ;
- étape "6" : au sein de l'application cliente embarquée 6a, la fonction source de traitement traite la réponse.

On présente maintenant, en relation avec les figures 4 à 7, un second mode de réalisation de l'invention dans lequel le logiciel client embarqué joue le rôle d'un logiciel client de supervision.

Dans ce second mode de réalisation, le module de radiocommunication n'est pas autonome (contrairement au premier mode de réalisation), mais est piloté par un équipement tiers avec lequel il coopère. La configuration est donc celle de l'art antérieur, décrite ci-dessus en relation avec la figure 2 (les mêmes éléments conservent les mêmes références numériques). En d'autres termes, une application cliente externe (logiciel client de pilotage) 2 envoie des commandes AT à un logiciel principal 3, en vue de leur exécution par le logiciel principal 3.

Selon le second mode de réalisation de l'invention, le module de radiocommunication 1 héberge et exécute en outre un logiciel client embarqué 6, jouant le rôle d'un logiciel client de supervision et comprenant notamment une application cliente embarquée 6a et une application d'interface 6b. De façon transparente pour l'application cliente externe 2, le logiciel client embarqué 6 supervise l'exécution (ou non) des commandes AT par les moyens 4 d'exécution compris dans le logiciel principal 3.

Le logiciel client embarqué 6 (logiciel de supervision) peut décider de la mise en oeuvre, au sein du module de radiocommunication, notamment de :
- un mécanisme d'aiguillage et de traitement des commandes AT, envoyées par l'application cliente externe (logiciel client de pilotage) 2. Trois variantes de mise en oeuvre de ce mécanisme sont par exemple proposées, selon lesquelles le logiciel principal 3 transmet les commandes AT qu'il reçoit : soit uniquement aux moyens 4 d'exécution (première variante), soit uniquement au logiciel client embarqué 6 (seconde variante), soit aux deux (troisième variante) ;
- un mécanisme d'aiguillage et de traitement des réponses AT, résultant de l'exécution par les moyens 4 d'exécution (compris dans le logiciel principal 3) de commandes AT. Trois variantes de mise en oeuvre de ce mécanisme sont par exemple proposées, selon lesquelles les réponses AT générées par le logiciel principal 3 sont transmises respectivement uniquement à l'application cliente externe 2 (première variante), uniquement au logiciel client embarqué 6 (seconde variante), ou bien aux deux (troisième variante).

On notera que la première variante de chacun des deux mécanismes précités (relatifs aux commandes AT et aux réponses AT respectivement) signifie que le logiciel client embarqué 6 peut décider d'être totalement passif à certains moments. Elles correspondent donc à un fonctionnement classique du module de radiocommunication, tel que décrit précédemment en relation avec la figure 2, et ne sont pas décrites à nouveau.

On présente maintenant, en relation avec la figure 4, la seconde variante du mécanisme d'aiguillage et de traitement des commandes AT, qui permet au logiciel client embarqué 6 de filtrer les commandes AT provenant de l'application cliente externe 2.

Le fonctionnement de cette seconde variante du mécanisme d'aiguillage et de traitement des commandes AT peut être résumé en deux phases successives, à savoir :
- une phase préalable de sélection, par l'application cliente externe 2, de la (seconde) politique d'aiguillage de commandes AT, selon laquelle les commandes AT sont retransmises uniquement au logiciel client embarqué 6, et
- une phase de traitement, selon la (seconde) politique d'aiguillage de commandes sélectionnée, des commandes AT envoyées par l'application cliente externe 2.

La phase préalable de sélection de la seconde politique d'aiguillage de commandes AT comprend les étapes suivantes :
- étape "1" : l'application cliente embarquée 6a appelle une fonction source ("wm_atCmdPreParserSubscribe") d'inscription auprès du logiciel principal 3 à un service d'aiguillage de commandes AT (ou "command pre-parsing service" en anglais), avec un paramètre de cette fonction d'inscription qui indique le choix de la seconde politique d'aiguillage de commandes AT. Cette fonction source est présentée en détail dans la suite de la description ;
- étape "2" : l'application d'interface 6b appelle, au sein du logiciel principal 3, la ou les fonction(s) d'exécution appropriée(s), dite(s) fonction d'enregistrement de l'inscription au service d'aiguillage de commandes AT;
- étape "3" : le logiciel principal 3 établit l'inscription demandée par l'application cliente embarquée 6a, via l'application d'interface 6b.

Dans un seul souci de simplification, on suppose dans la suite de la description (et comme illustré sur la figure 4), que la ou les fonction(s) d'enregistrement de l'inscription au service d'aiguillage de commandes AT sont comprises, au sein du logiciel principal 3, dans les moyens 4 d'exécution de commandes AT.

Egalement dans un seul souci de simplification, on suppose dans la suite de la description (et comme illustré sur la figure 4), que les moyens d'aiguillage de commandes (discutés ci-après) sont compris, au sein du logiciel principal 3, dans les moyens 4 d'exécution de commandes AT.

La phase de traitement des commandes AT comprend les étapes suivantes :
- étape "4" : l'application cliente externe 2 envoie une commande AT au logiciel principal 3 ;
- étape "5" : la liaison série 5 transmet la commande AT à des moyens d'aiguillage de commandes, compris dans les moyens 4 d'exécution (eux-mêmes compris dans le logiciel principal 3) et fonctionnant selon la seconde politique d'aiguillage de commandes AT (sélectionnée lors de la phase préalable) ;
- étape "6" : sans être exécutées par les moyens 4 d'exécution, la commande AT est retransmise uniquement au logiciel client embarqué 6 ;
- étape "7" : la commande AT est expédiée par l'application d'interface 6b, qui appelle, au sein de l'application cliente embarquée 6a, la fonction source ("wm_apmAppliParser") de traitement d'un message provenant du logiciel principal, paramétrée ici notamment par un message qui contient la commande AT et qui indique qu'il s'agit de la commande AT "originale". Cette fonction source est présentée en détail dans la suite de la description ;
- étape "8" : au sein de l'application cliente embarquée 6a, la fonction source de traitement traite la commande AT.

Ce traitement consiste par exemple à renvoyer la commande AT vers les moyens 4 d'exécution (selon le mécanisme correspondant au premier mode de réalisation de l'invention, décrit ci-dessus en relation avec la figure 3). Il peut également consister en la fourniture arbitraire d'une réponse par le logiciel client embarqué 6 lui-même, sans que la commande AT soit exécutée. Dans ce cas, le logiciel client embarqué 6 tient par exemple compte d'au moins une information relative à la commande AT concernée (type de commande, nature du ou des paramètres, etc). D'une façon générale, quel que soit le traitement effectué, on comprend que le logiciel client embarqué 6 "filtre" la commande AT.

On présente maintenant, en relation avec la figure 5, la troisième variante du mécanisme d'aiguillage et de traitement des commandes AT, qui permet au logiciel client embarqué 6 d'espionner les commandes AT provenant de l'application cliente externe 2.

Le fonctionnement de cette troisième variante du mécanisme d'aiguillage et de traitement des commandes AT peut aussi être résumé en deux phases successives, à savoir:
- une phase préalable de sélection, par l'application cliente externe 2, de la (troisième) politique d'aiguillage de commandes AT, selon laquelle les commandes AT sont retransmises non seulement au logiciel client embarqué 6 mais aussi aux moyens 4 d'exécution (compris dans le logiciel principal 3), et
- une phase de traitement, selon la (troisième) politique d'aiguillage de commandes sélectionnée, des commandes AT envoyées par l'application cliente externe 2.

Le fonctionnement de cette troisième variante diffère de celui de la seconde variante essentiellement en ce que :
- lors de l'étape "1" de la phase préalable, l'application cliente embarquée 6a sélectionne la troisième (et non pas la seconde) politique d'aiguillage de commandes AT ;
- lors de l'étape "6" de la phase de traitement, la commande AT est transmise aux moyens 4 d'exécution et une copie de cette commande AT est transmise au logiciel client embarqué 6 ;
- lors de l'étape "8" de la phase de traitement, au sein de l'application cliente embarquée 6a, la fonction source de traitement traite la copie de la commande AT;
- la phase de traitement comprend en outre une étape "7"', au cours de laquelle les moyens 4 d'exécution compris dans le logiciel principal 3 exécutent la commande AT.

On présente maintenant, en relation avec la figure 6, la seconde variante du mécanisme d'aiguillage et de traitement des réponses AT, qui permet au logiciel client embarqué 6 de filtrer les réponses AT destinées à l'application cliente externe 2.

Le fonctionnement de cette seconde variante du mécanisme d'aiguillage et de traitement des réponses AT peut aussi être résumé en deux phases successives, à savoir :
- une phase préalable de sélection, par l'application cliente externe 2, de la (seconde) politique d'aiguillage de réponses AT, selon laquelle les réponses AT générées par le logiciel principal 3 sont transmises uniquement au logiciel client embarqué 6 ;
- une phase de traitement, selon la (seconde) politique d'aiguillage de réponses sélectionnée, des réponses AT générées par le logiciel principal 3.

La phase préalable de sélection de la seconde politique d'aiguillage de réponses AT comprend les étapes suivantes :
- étape "1" : l'application cliente embarquée 6a appelle une fonction source ("wm_atRspPreParserSubscribe") d'inscription auprès du logiciel principal 3 à un service d'aiguillage de réponses AT (ou "response pre-parsing service" en anglais), avec un paramètre de cette fonction d'inscription qui indique le choix de la seconde politique d'aiguillage de réponses AT. Cette fonction source est présentée en détail dans la suite de la description ;
- étape "2" : l'application d'interface 6b appelle, au sein du logiciel principal 3, la ou les fonction(s) d'exécution appropriée(s), dite(s) fonction d'enregistrement de l'inscription au service d'aiguillage de réponses AT ;
- étape "3" : le logiciel principal 3 établit l'inscription demandée par l'application cliente embarquée 6a, via l'application d'interface 6b.

Dans un seul souci de simplification, on suppose dans la suite de la description (et comme illustré sur la figure 6), que la ou les fonction(s) d'enregistrement de l'inscription au service d'aiguillage de réponse AT sont comprises, au sein du logiciel principal 3, dans les moyens 4 d'exécution de commandes AT.

Egalement dans un seul souci de simplification, on suppose dans la suite de la description (et comme illustré sur la figure 6), que les moyens d'aiguillage de réponses (discutés ci-après) sont compris, au sein du logiciel principal 3, dans les moyens 4 d'exécution de commandes AT.

La phase de traitement des réponses AT comprend les étapes suivantes :
- étape "4" : l'application cliente externe 2 envoie une commande AT au logiciel principal 3 ;
- étape "5" : la liaison série 5 transmet la commande AT aux moyens 4 d'exécution (compris dans le logiciel principal 3) ;
- étape "6" : les moyens 4 d'exécution exécutent la commande AT et génère une réponse AT ;
- étape "7" : des moyens d'aiguillage de réponses, compris dans les moyens 4 d'exécution et fonctionnant selon la seconde politique d'aiguillage de réponses AT (sélectionnée lors de la phase préalable), envoient la réponse AT au logiciel client embarqué 6 ;
- étape "8" : la réponse AT est expédiée par l'application d'interface 6b, qui appelle, au sein de l'application cliente embarquée 6a, la fonction source ("wm_apmAppliParser") de traitement d'un message provenant du logiciel principal, paramétrée ici notamment par un message qui contient la réponse AT et qui indique qu'il s'agit de la réponse AT "originale" ;
- étape "9" : au sein de l'application cliente embarquée 6a, la fonction source de traitement traite la réponse AT. On peut parler ici de "filtrage" des réponses AT par le logiciel client embarqué.

On présente maintenant, en relation avec la figure 7, la troisième variante du mécanisme d'aiguillage et de traitement des réponses AT, qui permet au logiciel client embarqué 6 d'espionner les réponses AT destinées à l'application cliente externe 2.

Le fonctionnement de cette troisième variante du mécanisme d'aiguillage et de traitement des réponses AT peut aussi être résumé en deux phases successives, à savoir:
- une phase préalable de sélection, par l'application cliente externe 2, de la (troisième) politique d'aiguillage de réponses AT, selon laquelle les réponses AT sont retransmises non seulement au logiciel client embarqué 6 mais aussi à l'application cliente externe 2, et
- une phase de traitement, selon la (troisième) politique d'aiguillage de réponses sélectionnée, des réponses AT générées par le logiciel principal 3.

Le fonctionnement de cette troisième variante diffère de celui de la seconde variante essentiellement en ce que :
- lors de l'étape "1" de la phase préalable, l'application cliente embarquée 6a sélectionne la troisième (et non pas la seconde) politique d'aiguillage de réponses AT;
- lors de l'étape "7" de la phase de traitement, la réponse AT est transmise à l'application cliente externe 2 et une copie de cette réponse AT est transmise vers le logiciel client embarqué 6 ;
- lors de l'étape "9" de la phase de traitement, au sein de l'application cliente embarquée 6a, la fonction source de traitement traite la copie de la réponses AT ;
- la phase de traitement comprend en outre une étape "8"', au cours de laquelle la réponse est envoyée à travers la liaison série 5, et une étape "9"' au cours de laquelle l'application cliente externe 2 reçoit et traite la réponse.

On trouvera en Annexe 1 une présentation détaillée de certaines des fonctions sources sur lesquelles est basée l'application cliente embarquée.

A titre illustratif, on trouvera en Annexe 2 un exemple d'application embarquée, écrite en langage C et dont l'objectif est d'envoyer une commande AT13 trois secondes après chaque initialisation et écriture d'objets en mémoire Flash.

Dans le cadre de la présente invention, de façon optionnelle, on peut également prévoir d'utiliser, outre les commandes AT standard, au moins une des commandes AT supplémentaires suivantes :
- commande de chargement d'un logiciel client (AT+WDWL), permettant au logiciel client externe de charger un nouveau logiciel client dans le module de radiocommunication ;
- commande de désactivation (AT+WOPEN), permettant au logiciel client externe de désactiver le logiciel client embarqué.

### ANNEXE 1 :

### Présentation détaillée de certaines fonctions sources sur lesquelles est basée l'application cliente embarquée

### A1) "wm apmAppliParser" :

fonction de traitement d'un message provenant du logiciel principal. Le message formant paramètre de la fonction de traitement contient notamment une commande AT ou une réponse à une commande AT.

**Nom exact :**
bool wm_apmAppliParser(wm_apmMsg_t * *Message*);

### Paramètres

### Message

La structure du message change avec chaque type de message reçu :

```
 typedef struct
 {
   s16 MsgTyp;
 /* "MsgTyp" est un type de message reçu, qui permet de déterminer la structure
  associée du corps du message */
  wm_apmBody_t Body; /* "Body" est un corps de message spécifique */
 } wm_apmMsg_t;
 Valeurs de "MsgTyp" :
   WM_AT_SEND_RSP
```

Le message contient une réponse à une commande AT préalablement envoyée au logiciel principal par le logiciel client embarqué

### WM_AT_UNSOLICITED

Le message contient une commande AT non sollicitée

### WM_AT_CMD_PRE_PARSER

Le message contient une commande AT envoyée par un logiciel client externe, via le logiciel principal

### WM_AT_RSP_PRE_PARSER

Le message contient une réponse AT résultant de l'exécution par le logiciel principal d'une commande AT provenant d'une application externe.

### WM_OS_TIMER

Le message est envoyé à l'expiration d'une temporisation.

La structure du corps est :

```
 typedef union
 {
    /* sont incluses ici toutes les structures spécifiques associées aux types de
    message "MsgTyp" */
    /* WM_AT_SEND_RSP */
    wm_atResponse t ATResponse;
    /* WM_AT_UNSOLICITED */
    wm_atUnsolicited_t ATUnsolicited;
    /* WM_AT_CMD_PRE_PARSER */
    wm_atCmdPreParser_t ATCmdPreParser;
    ;/* WM_AT__RSP_PRE_PARSER */
    wm_atRspPreParser_t ATRspPreParser
    /* WM_OS_TIMER */
    wm_osTimer_t OSTimer;
 } wm_apmBody_t;
```

Les sous-structures du corps sont :
**Corps pour WM_A T_SEND_RSP :**

```
   typedef struct
     wm_atSendRspType_e Type;
     u16 StrLength; /* Longueur de strData */
     char StrData[1]; /* réponse AT */
   } wm_atResponse_t;
   typedef enum
     WM_AT_SEND_RSP_TO_EMBEDDED,
     WM_AT_SEND_RSP_TO_EXTERNAL,
     WM_AT_SEND_RSP_BROADCAST
   } wm_atSendRspType_e;
   (voir le détail de la fonction "wm_atSendCommand", pour la description de
   "wm_atSendRspType_e description").
```

**Corps pour WM_ AT_UNSOLICITED :**

```
   typedef struct
     wm_atUnsolicited_e Type;
     u16 StrLength;
     char StrData[1];
   } wm_atUnsolicited_t;

   typedef enum {
     WM_AT_UNSOLICITED_TO_EXTERNAL,
     WM_AT_UNSOLICITED_TO_EMBEDDED,
     WM_AT_UNSOLICITED_BROADCAST
   } wm_atUnsolicited_e;
   (voir le détail de la fonction "wm_atUnsolicitedSubscription", pour la
   description de "wm_atUnsolicited_e").
```

**Corps pour WM_AT_CMD_PRE_PARSER :**

```
   typedef struct {
     wm_atCmdPreSubscribe_e Type;
     u16 StrLength;
     char StrData[1];
   } wm_atcmdPreParser_t;

   typedef enum {
     WM_AT_CMD_PRE_WAVECOM_TREATMENT, /* Valeur par défaut */
     WM_AT_CMD_PRE_EMBEDDED_TREATMENT,
     WM_AT_CMD_PRE BROADCAST
   } wm_atCmdPreSubscribe_e;

   (voir le détail de la fonction "wm_atRspPreParserSubscribe", pour la description
   de "wm-atCmdPreSubscribe_e").
```

**Corps pour WM_AT_RSP_PRE_PARSER :**

```
   typedef struct
     wm_atRspPreSubscribe_e Type;
     u16 StrLength;
     char StrData[1];
   } wm_atRspPreParser_t;
 
   typedef enum {
     WM_AT_RSP__PRE_WAVECOM_TREATMENT, /* Valeur par défaut */
     WM_AT_RSP_PRE_EMBEDDED_TREATMENT,
     WM_AT_RSP_PRE_BROADCAST
   } wm_atRspPreSubscribe_e;

   (voir le détail de la fonction "wm_atRspPreParserSubscribe", pour la description
   de "wm_atRspPreSubscribe_e").
```

**Corps pour WM_OS_TIMER :**

```
   typedef struct {
     u8 Ident; /* Identifiant de Temporisation */
   } wm_osTimer_t;
   (voir le détail de la fonction "wm_osStartTimer", pour la description de "Ident").
 Valeurs retournées 
```

Le paramètre de retour indique si le message a été traité (VRAI) ou non (FAUX).

### A2) "wm atSendCommand"

fonction d'envoi vers le logiciel principal d'au moins une commande AT, dont un paramètre indique le(s) logiciel(s) destinataire(s) (à savoir le logiciel client embarqué et/ou le logiciel client externe) de la réponse résultant de l'exécution de cette commande AT.
**Nom exact :**
**void wm_atSendCommand (u16** AtStringSize,
**wm_atSendRspType_e** ResponseType,
**char** *AtString, );

### Paramètres

### AtString

Ce paramètre peut être tout type de chaîne de commandes AT, en caractères ASCII. Plusieurs chaînes peuvent être envoyées en même temps.

### AtStringSize

Taille du paramètre précédent : AtString.

### ResponseType

Type de la réponse

```
 typedef enum {
   WM_AT_SEND_RSP_TO_EMBEDDED, /* Valeur par défaut */
   WM_AT_SEND_RSP_TO_EXTERNAL,
   WM_AT_SEND_RSP_BROADCAST
 } wm_atSendRspType_e;
```

WM_AT_SEND_RSP_TO_EMBEDDED
Toutes les réponses sont redirigées vers l'application cliente embarquée (Embedded application). C'est le mode par défaut.

WM_AT_SEND_RSP TO_EXTERNAL
Toutes les réponses sont redirigées vers l'application cliente externe (PC).

WM_AT_SEND_RSP_BROADCAST
Toutes les réponses sont redirigées ("diffusées") vers l'application cliente embarquée et l'application cliente externe (PC).

### A3) "wm atUnsolicitedSubscription" :

fonction d'inscription auprès du logiciel principal à un service de réception de commandes AT non sollicitées, dont un paramètre indique vers quel(s) logiciel(s) destinataire(s) (à savoir le logiciel client embarqué et/ou le logiciel client externe) doit être redirigée chacune des commandes AT non sollicitées

**Nom exact :**
**void wm_atUnsolicitedSubscriptîon (**
**wm_atUnsolicited_e** Unsolicited);

### Paramètres

### Unsolicited

Ce paramètre décrit l'action effectuée quand une commande AT non sollicitée arrive.

```
   typedef enum {
   WM_AT_UNSOLICITED_TO_EXTERNAL, /* Valeur par défaut */
   WM_AT_UNSOLICITED TO_EMBEDDED,
   WM_AT_UNSOLICITED_BROADCAST,
 ) wm_atUnso!icited_e;
```

WM_AT_UNSOLICITED_TO_EXTERNAL
Toutes les commandes non sollicitées seront redirigées vers l'application cliente externe (PC) (mode par défaut)

WM_AT_UNSOLICITED_TO_EMBEDDED
Toutes les commandes non sollicitées seront redirigées vers l'application cliente embarquée

WM_AT_UNSOLICITED_BROADCAST
Toutes les commandes non sollicitées seront redirigées (diffusées) vers l'application cliente externe (PC) et l'application cliente embarquée

### A4) "wm at CmdPreParserSubscribe" :

fonction d'inscription auprès du logiciel principal à un service d'aiguillage de commandes AT, dont un paramètre indique vers quel(s) logiciel(s) (à savoir le logiciel principal et/ou le logiciel client embarqué) doit être aiguillée chacune des commandes AT provenant d'une application externe.
**Nom exact :**
**void wm_atCmdPreParserSubseribe (**
**wm_atCmdPreSubscribe_e** SubscribeType);

### Paramètres

### SubscribeType

Ce paramètre décrit l'action effectuée quand une commande AT arrive

```
  typedef enum {
  WM_AT_CMD_PRE_WAVECOM_TREATMENT, /* Valeur par défaut */
  WM_AT_CMD_PRE_EMBEDDED_TREATMENT,
  WM_AT_CMD_PRE_BROADCAST
 } wm_atCmdPreSubscribe_e;
```

WM_AT_CMD_PRE_WAVECOM_TREATMENT
L'application cliente embarquée ne veut pas filtrer (ni espionner) les commandes
envoyées par l'application cliente externe (mode par défaut).

WM_AT_CMD_PRE_EMBEDDED_TREATMENT
L'application cliente embarquée veut filtrer les commandes envoyées par l'application cliente externe

WM_AT_CMD_PRE_BROADCAST
L'application cliente embarquée veut espionner les commandes envoyées par l'application cliente externe

### A5) "wm atRspPreParserSubscribe" :

fonction d'inscription auprès du logiciel principal à un service d'aiguillage de réponses, dont un paramètre indique vers quel(s) logiciel(s) (à savoir le logiciel client externe et/ou le logiciel client embarqué) doit être aiguillée chacune des réponses résultant de l'exécution par le logiciel principal d'une commande AT provenant d'une application externe.
**Nom exact :**
**void wm_atRspPreParserSubscribe (**
**wm_atRspPreSubscribe_e** SubscribeType);

### Paramètres

### SubscribeType

Ce paramètre décrit l'action effectuée quand une commande AT arrive

```
   typedef enum {
   WM_AT_RSP_PRE_WAVECOM_TREATMENT, /* Valeur par défaut */
   WM_AT_RSP_PRE_EMBEDDED_TREATMENT,
   WM_AT_RSP_PRE_BROADCAST
 } wm_atRspPreSubscribe_e;
```

WM_AT_RSP_PRE_WAVECOM_TREATMENT
L'application cliente embarquée ne veut pas filtrer (ni espionner) les réponses
envoyées à l'application cliente externe (mode par défaut).

WM_AT_RSP_PRE_EMBEDDED_TREATMENT
L'application cliente embarquée veut filtrer les réponses envoyées à l'application cliente externe.

WM_AT_RSP PRE_BROADCAST
L'application cliente embarquée veut espionner les réponses envoyées à l'application cliente externe.

### A6) "wm atSendRspExternalApp" :

fonction d'envoi vers le logiciel client externe, via le logiciel principal, d'au moins une réponse. L'utilisation de cette fonction n'est possible que si une inscription préalable au service d'aiguillage de réponses a été effectuée, avec aiguillage d'une copie des réponses notamment vers le logiciel client embarqué
**Nom exact :**
**void wm_atSendRspExternalApp (u16** AtStringSize, **char** *AtString,);

### Paramètres

### AtString

peut être tout type de chaîne de réponses AT, en caractères ASCII

### AtStringSize

Taille du paramètre précédent : AtString

### A7) "DataFlowService" :

fonction d'émission et/ou réception de données par le logiciel client embarqué, via le logiciel principal, après qu'une communication de données a été établie

### A8)_"wm osStartTimer" :

fonction d'armement d'une temporisation, un paramètre de ladite fonction d'armement indiquant la temporisation à armer

### A9) "wm osStopTimer" :

fonction d'arrêt d'une temporisation, un paramètre de ladite fonction d'arrêt indiquant la temporisation à arrêter

### ANNEXE 2:

### Exemple d'application cliente embarquée

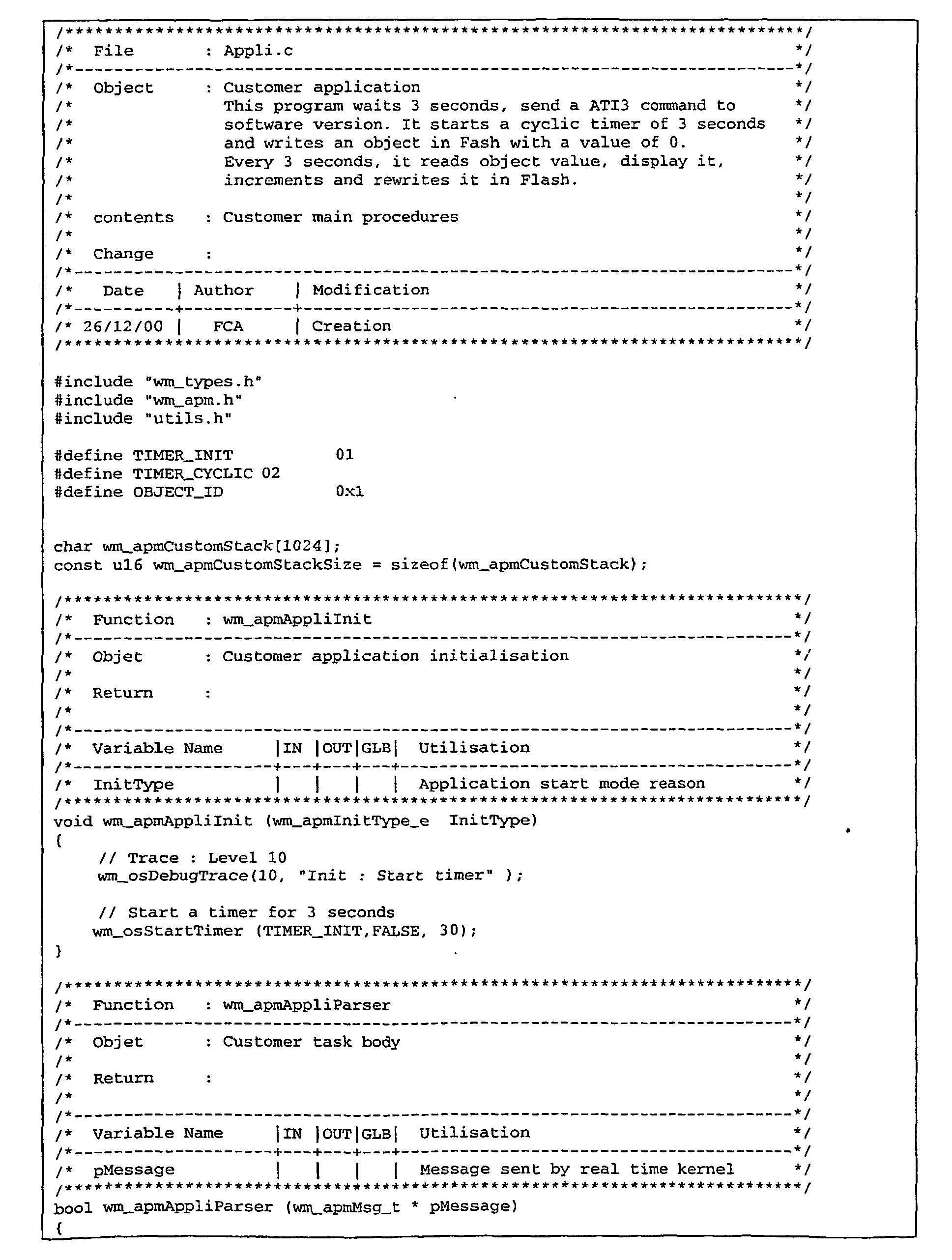

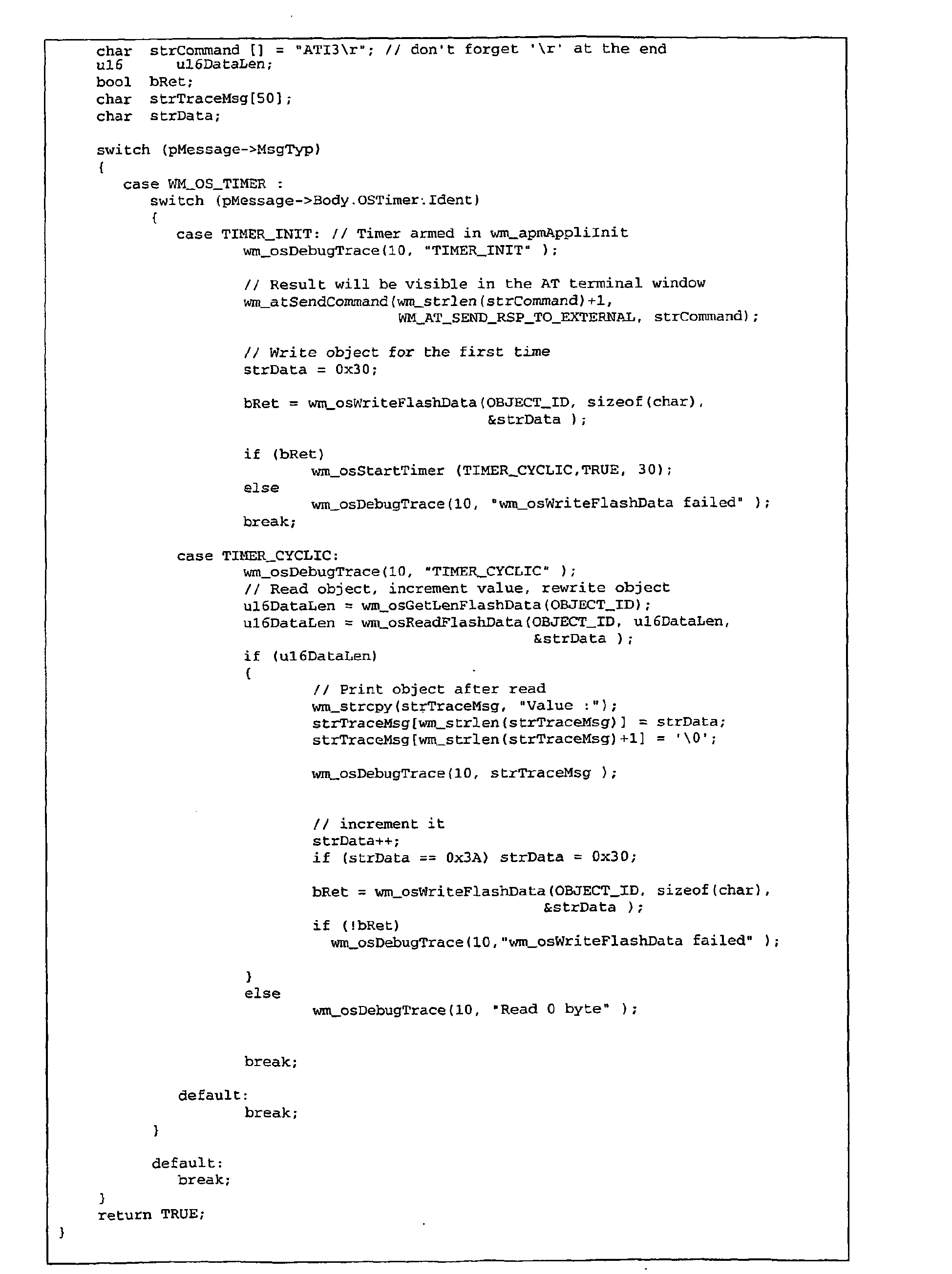

## Revendications

1. Module de radiocommunication (1), du type hébergeant et exécutant un logiciel principal (3) assurant des fonctions de radiocommunication, ledit logiciel principal (3) comprenant des moyens d'exécution de commandes de pilotage, envoyées au logiciel principal (3) par au moins un logiciel client de pilotage et appartenant à un jeu de commandes de pilotage prédéterminé,
**caractérisé en ce que** ledit module de radiocommunication (1) est adapté à héberger et exécuter en outre au moins un logiciel client, dit logiciel client embarqué (6),
et **en ce que** le logiciel client embarqué (6) et le logiciel principal (3) comprennent des moyens permettant au logiciel client embarqué (6) de jouer au moins un des deux rôles suivants :
- le rôle d'un logiciel client de pilotage, comprenant des moyens pour envoyer des commandes de pilotage au logiciel principal (3), et pour recevoir du logiciel principal (3) des réponses, résultant de l'exécution de certaines des commandes de pilotage ;
- le rôle d'un logiciel client de supervision, comprenant des moyens pour gérer l'exécution de commandes de pilotage envoyées par un logiciel client de pilotage, dit logiciel client externe, hébergé et exécuté par un équipement tiers coopérant avec le module de radiocommunication (1).

2. Module de radiocommunication (1) selon la revendication 1, **caractérisé en ce que**, pour permettre au logiciel client embarqué (6) de jouer le rôle d'un logiciel client de pilotage :
- le logiciel client embarqué (6) comprend des moyens d'envoi de commandes de pilotage vers les moyens d'exécution compris dans le logiciel principal (3) ;
- le logiciel principal (3) comprend des moyens d'envoi des réponses, résultant de l'exécution de certaines des commandes de pilotage par les moyens d'exécution compris dans le logiciel principal (3), vers le logiciel client embarqué (6);
- le logiciel client embarqué (6) comprend des moyens de traitement des réponses envoyées vers lui par le logiciel principal (3).

3. Module de radiocommunication (1) selon l'une quelconque des revendications 1 et 2, **caractérisé en ce que**, pour permettre au logiciel client embarqué (6) de jouer le rôle d'un logiciel client de supervision :
- le logiciel principal (3) comprend des moyens d'aiguillage de commandes, en fonction d'une politique d'aiguillage de commandés déterminée, de façon à transmettre les commandes de pilotage provenant du logiciel client externe vers le logiciel client embarqué (6) et/ou vers les moyens d'exécution compris dans le logiciel principal (3) ;
- le logiciel client embarqué (6) comprend des moyens de traitement des commandes de pilotage aiguillées vers lui par lesdits moyens d'aiguillage de commandes.

4. Module de radiocommunication (1) selon la revendication 3, **caractérisé en ce que** le logiciel client embarqué (6) comprend des moyens de sélection de la politique d'aiguillage de commandes appliquée par lesdits moyens d'aiguillage de commandes, lesdits moyens de sélection de la politique d'aiguillage de commandes comprenant eux-mêmes des moyens pour transmettre :
- les commandes de pilotage provenant du logiciel client externe uniquement aux moyens d'exécution compris dans le logiciel principal (3) ;
- les commandes de pilotage provenant du logiciel client externe uniquement au logiciel client embarqué (6) ;
- les commandes de pilotage provenant du logiciel client externe aux moyens d'exécution compris dans le logiciel principal (3) et au logiciel client embarqué (6).

5. Module de radiocommunication (1) selon l'une quelconque des revendications 3 et 4, **caractérisé en ce que** lesdits moyens de traitement des commandes comprennent des moyens de décision permettant de prendre; pour chaque commande, au moins une décision appartenant au groupe comprenant :
- envoi de la commande de pilotage vers les moyens d'exécution compris dans le logiciel principal (3), le logiciel client embarqué (6) comprenant à cet effet des moyens d'envoi de commandes de pilotage vers les moyens d'exécution ;
- fourniture ou non d'une réponse, uniquement en fonction d'au moins une information relative à la commande, sans exécution de la commande, le logiciel client embarqué (6) comprenant à cet effet des moyens d'envoi de la réponse au logiciel client externe, via le logiciel principal (3).

6. Module de radiocommunication (1) selon l'une quelconque des revendications 1 à 5, **caractérisé en ce que**, pour permettre au logiciel client embarqué (6) de jouer le rôle d'un logiciel client de supervision :
- le logiciel principal (3) comprend des moyens d'aiguillage de réponses, en fonction d'une politique d'aiguillage de réponses déterminée, de façon à transmettre des réponses, résultant de l'exécution de certaines des commandes de pilotage par les moyens d'exécution compris dans le logiciel principal (3), vers le logiciel client embarqué (6) et/ou vers le logiciel client externe;
- le logiciel client embarqué (6) comprend des moyens de traitement des réponses aiguillées vers lui par lesdits moyens d'aiguillage de réponses.

7. Module de radiocommunication (1) selon la revendication 6, **caractérisé en ce que** le logiciel client embarqué (6) comprend des moyens de sélection de la politique d'aiguillage de réponses appliquée par lesdits moyens d'aiguillage de réponses, lesdits moyens de sélection de la politique d'aiguillage de commandes comprenant eux-mêmes des moyens pour transmettre:
- les réponses provenant des moyens d'exécution uniquement au logiciel client externe ;
- les réponses provenant des moyens d'exécution uniquement au logiciel client embarqué (6);
- les réponses provenant des moyens d'exécution au logiciel client embarqué (6) et au logiciel client externe.

8. Module de radiocommunication (1) selon l'une quelconque des revendications 1 à 7, **caractérisé en ce qu'**il est compris dans un dispositif appartenant au groupe comprenant :
- des terminaux de radiocommunication ;
- des dispositifs, autres que des terminaux de radiocommunication, nécessitant une fonctionnalité de communication sans fil ;
- des modems.

9. Module de radiocommunication (1.) selon l'une quelconque des revendications 1 à 7, **caractérisé en ce que** ledit logiciel principal (3) comprend une application principale (3a), basée sur un jeu de fonctions d'exécution, permettant chacune l'exécution d'au moins une desdites commandes de pilotage,
**en ce que** ledit logiciel client embarqué (6) comprend une application cliente (6a), basée notamment sur un jeu de fonctions sources, permettant chacune l'envoi ou la réception, vers ou en provenance de l'application principale (3a), de commandes de pilotage ou de réponses à des commandes de pilotage,
et **en ce que** ledit logiciel principal (3) et/ou ledit logiciel client embarqué (6) comprend(nnent) une application d'interface (6b), permettant l'interfaçage desdites fonctions sources avec lesdites fonctions d'exécution.

10. Module de radiocommunication (1) selon l'une quelconque des revendications 1 à 9, **caractérisé en ce que** ledit logiciel client embarqué (6) comprend une application cliente (6a), basée sur un jeu de fonctions sources, permettant chacune l'envoi ou la réception, vers ou en provenance du logiciel principal (3), de commandes de pilotage ou de réponses à des commandes de pilotage,
et **en ce que** ledit jeu de fonctions sources comprend notamment une fonction de traitement d'un message provenant du logiciel principal (3), un paramètre de ladite fonction de traitement étant ledit message.

11. Module de radiocommunication (1) selon la revendication 10, **caractérisé en ce que** ledit message formant paramètre de ladite fonction de traitement possède une structure comprenant :
- un premier champ contenant une information relative au type dudit message ;
- un second champ contenant le corps spécifique dudit message.

12. Module de radiocommunication (1) selon la revendication 11, **caractérisé en ce que** le type dudit message appartient au groupe comprenant :
- message contenant une réponse à une commande de pilotage préalablement envoyée au logiciel principal (3) par le logiciel client embarqué (6);
- message contenant une commande de pilotage non sollicitée ;
- message contenant une commande de pilotage envoyée par un logiciel client externe, via le logiciel principal (3) ;
- message contenant une réponse résultant de l'exécution par le logiciel principal (3) d'une commande de pilotage ; ,
- message envoyé à l'expiration d'une temporisation.

13. Module de radiocommunication (1) selon l'une quelconque des revendications 10 à 12, **caractérisé en ce que** ledit jeu de fonctions sources comprend en outre au moins une fonction appartenant au groupe comprenant :
- une fonction d'envoi vers le logiciel principal (3) d'au moins une commande de pilotage, un premier paramètre de ladite fonction d'envoi étant ladite au moins une commande de pilotage, un second paramètre de ladite fonction d'envoi indiquant le(s) logiciel(s) destinataire(s), à savoir le logiciel client embarqué (6) et/ou le logiciel client externe, de la réponse résultant de l'exécution de ladite commande de pilotage ;
- une fonction d'inscription auprès du logiciel principal (3) à un service de réception de commandes de pilotage non sollicitées, un paramètre de ladite fonction d'inscription indiquant vers quel(s) logiciel(s) destinataire(s), à savoir le logiciel client embarqué (6) et/ou le logiciel client externe, doit être redirigée chacune des commandes de pilotage non sollicitées ;
- une fonction d'inscription auprès du logiciel principal (3) à un service d'aiguillage de commandes de pilotage, un paramètre de ladite fonction d'inscription indiquant vers quel(s) logiciel(s). à savoir le logiciel principal (3) et/ou le logiciel client embarqué (6), doit être aiguillée chacune des commandes de pilotage provenant du logiciel client externe ;
- une fonction d'inscription auprès du logiciel principal (3) à un service d'aiguillage de réponses, un paramètre de ladite fonction d'inscription indiquant vers quel(s) logiciel(s), à savoir le logiciel client externe et/ou le logiciel client embarqué (6), doit être aiguillée chacune des réponses résultant de l'exécution par le logiciel principal (3) d'une commande de pilotage ;
- une fonction d'envoi vers le logiciel client externe, via le logiciel principal (3), d'au moins une réponse, un paramètre de ladite fonction d'envoi étant ladite au moins une réponse.

14. Module de radiocommunication (1) selon l'une quelconque des revendications 1 à 13, **caractérisé en ce que** le logiciel client embarqué (6) et le logiciel principal (3) utilisent chacun une partie distincte d'une même mémoire vive, une tentative d'accès de l'un des logiciels à une partie de la mémoire vive réservée à l'autre logiciel provoquant un arrêt de fonctionnement.

15. Module de radiocommunication (1) selon l'une quelconque des revendications 1 à 14, **caractérisé en ce que** ledit jeu de commandes de pilotage est un jeu de commandes AT standard.

16. Module de radiocommunication (1) selon la revendication 15, **caractérisé en ce que** ledit jeu de commandes de pilotage comprend, outre les commandes AT standard, une commande AT supplémentaire, dite commande de chargement d'un logiciel client, permettant au logiciel client externe de charger un nouveau logiciel client dans le module de radiocommunication (1).

17. Module de radiocommunication (1) selon l'une quelconque des revendications 15 et 16, **caractérisé en ce que** ledit jeu de commandes de pilotage comprend, outre les commandes AT standard, une commande AT supplémentaire, dite commande de désactivation, permettant au logiciel client externe de désactiver le logiciel client embarqué (6).

18. Procédé de mise en oeuvre d'un logiciel client de pilotage d'un module de radiocommunication (1), ledit module de radiocommunication (1) étant du type hébergeant et exécutant un logiciel principal (3) assurant des fonctions de radiocommunication, ledit logiciel principal (3) comprenant des moyens d'exécution de commandes de pilotage, envoyées au logiciel principal (3) par ledit logiciel client de pilotage et appartenant à un jeu de commandes de pilotage prédéterminé,
**caractérisé en ce que** ledit module de radiocommunication (1) héberge et exécute au moins un logiciel client, dit logiciel client embarqué (6), et **en ce que** le logiciel client embarqué (6) et le logiciel principal (3) dialoguent l'un avec l'autre de façon que le logiciel client embarqué (6) joue au moins un des deux rôles suivants :
- le rôle dudit logiciel client de pilotage, envoyant des commandes de pilotage au logiciel principal (3), et recevant du logiciel principal (3) des réponses, résultant de l'exécution de certaines des commandes de pilotage ;
- le rôle d'un logiciel client de supervision, gérant l'exécution de commandes de pilotage envoyées par ledit logiciel client de pilotage, ledit logiciel client de pilotage, dit logiciel client externe, étant hébergé et exécuté par un équipement tiers coopérant avec le module de radiocommunication (1).

## Claims

1. Radiocommunication module (1) of the type hosting and executing a main software (3) that performs radiocommunication functions, said main software (3) comprising means of executing driver commands sent to the main software (3) by at least one client driver software and belonging to a predetermined set of driver commands,
**characterised in that** said radiocommunication module (1) also is adapted for hosting and executing at least one client software, called the client embedded software (6),
and **in that** the client embedded software (6) and the main software (3) comprise means of enabling the client embedded software (6) to perform at least one of the following two roles:
- the role of a client driver software comprising means of sending driver commands to the main software (3), and of receiving responses from the main software resulting from the execution of some of the driver commands;
- the role of a client supervision software, comprising means of managing execution of driver commands sent by a client driver software, called client external software, hosted on and executed by a terminal equipment cooperating with the radiocommunication module (1).

2. Radiocommunication module (1) according to claim 1, **characterised in that**, so as to enable the client embedded software to act as a client driver software:
- the client embedded software (6) comprises means of sending driver commands to execution means included in the main software (3);
- the main software (3) comprises means of sending responses resulting from the execution of some driver commands by the execution means included in the main software (3), to the client embedded software (6);
- the client embedded software (6) comprises means of processing responses sent to it by the main software (3).

3. Radiocommunication module (1) according to any of claims 1 and 2, **characterised in that**, so as to enable the client embedded software (6) to act as a client supervision software:
- the main software (3) comprises means of preparsing commands as a function of a determined preparsing policy, so as to transmit driver commands from the client external software to the client embedded software
(6) and / or to the execution means contained in the main software;
- the client embedded software (6) comprises means of processing driver commands switched to it by said preparsing means.

4. Radiocommunication module (1) according to claim 3, **characterised in that** the client embedded software (6) comprises means of selecting the command preparsing policy applied by said preparsing means, said means of selecting the command preparsing policy comprising means of transmitting:
- the driver commands originating from the client external software only to the execution means within the main software (3);
- the driver commands originating from the client external software only to the client embedded software (6);
- the driver commands originating from the client external software to the execution means within the main software (3) and to the client embedded software (6).

5. Radiocommunication module (1) according to any of claims 3 and 4, **characterised in that** said command processing means comprise decision means enabling to take, for each command, at least one decision belonging to the group including:
- send the driver command to the execution means included in the main software (3), the client embedded software (6) comprising means of sending driver commands to the execution means for this purpose;
- supply or do not supply a response, only as a function of at least one item of information about the command, without executing the command, the client embedded software (6) comprising means of sending the response to the client external software for this purpose through the main software (3).

6. Radiocommunication module (1) according to any of claims 1 to 5, **characterised in that** in order to enable the client embedded software (6) to act as a client supervision software:
- the main software (3) comprises means of preparsing responses as a function of a determined response preparsing policy, so as to transmit responses, resulting from the execution of some driver commands by the execution means included in the main software (3), to the client embedded software (6) and / or to the client external software;
- the client embedded software (6) comprises means of processing responses switched to it by said response preparsing means.

7. Radiocommunication module (1) according to claim 6, **characterised in that** the client embedded software (6) comprises means of selecting the response preparsing policy applied by the response preparsing means, said means of selecting the command preparsing policy comprising means of transmitting:
- the responses originating from execution means only to the client external software;
- the responses originating from execution means only to the client embedded software (6);
- the responses originating from execution means to the client embedded software (6) and to the client external software.

8. Radiocommunication module (1) according to any of claims 1 to 7, **characterised in that** it is included within a device belonging to the following group:
- radiocommunication terminals;
- devices other than radiocommunication terminals necessitating a wireless communication feature;
- modems.

9. Radiocommunication module (1) according to any of claims 1 to 7, **characterised in that** said main software (3) comprises one main application (3a) based on a set of execution functions, each enabling the execution of at least one of said driver commands,
**in that** said client embedded software (6) comprises a client application (6a) particularly based on a set of source functions, each enabling sending or receiving driver commands or responses to driver commands, to or from the main application (3a),
and **in that** the main software (3) and / or the said client embedded software (6) comprise(s) an application interface (6b) enabling interfacing said source functions with said execution functions.

10. Radiocommunication module (1) according to any of claims 1 to 9, **characterised in that** said client embedded software (6) comprises a client application (6a), based on a set of source functions, each enabling sending or receiving driver commands or responses to driver commands, to or from the main application (3), and **in that** said set of source functions particularly comprises a function for processing a message originating from the main software (3), one parameter of said processing function being said message.

11. Radiocommunication module (1) according to claim 10, **characterised in that** said message forming a parameter of said processing function has a structure comprising:
- a first field containing information related to the type of said message;
- a second field containing the specific body of said message.

12. Radiocommunication module (1) according to claim 11, **characterised in that** said message type belongs to the group comprising:
- message containing a response to a driver command previously sent to the main software (3) by the client embedded software (6);
- message containing an unsolicited driver command;
- message containing a driver command sent by a client external software through the main software (3);
- message containing a response resulting from execution of a driver command by the main software (3);
- message sent on expiration of a timeout.

13. Radiocommunication module (1) according to any of claims 10 to 12, **characterised in that** said set of source functions also comprises at least one function belonging to the group comprising:
- a function for sending at least one driver command to the main software (3), a first parameter of said sending function being said at least one driver command, a second parameter of said sending function indicating the destination software(s) to which the response resulting from execution of said driver command is sent, namely the client embedded software (6) and/or the client external software;
- a registration function with the main software (3) to a service for reception of unsolicited driver commands, one parameter of said registration function indicating the destination software(s) to which each of the unsolicited driver commands is to be redirected, namely the client embedded software (6) and / or the client external software;
- a registration function with the main software (3) to a driver command preparsing service, one parameter of said registration function indicating to which software(s) each driver command originating from the client external software is to be directed, namely the main software (3) and / or the client embedded software (6);
- a registration function with the main software (3) to a driver command preparsing service, one parameter of said registration function indicating to which software(s) each response resulting from the execution of a driver command by the main software (3) is to be directed, namely the main software (3) and / or the client embedded software (6);
- a function for sending at least one response to the client external software, through the main software (3), a parameter of said sending function being said at least one response.

14. Radiocommunication module (1) according to any of claims 1 to 13, **characterised in that** the client embedded software (6) and the main software (3) each use a distinct part of a RAM, and an attempt by one of the two software programs to access part of the RAM reserved for the other software stopping operation.

15. Radiocommunication module (1) according to any of claims 1 to 14, **characterised in that** said set of driver commands is a set of standard AT commands.

16. Radiocommunication module (1) according to claim 15, **characterised in that** said set of driver commands comprises an additional AT command, called load commund of a client software, enabling the client external software to load a new client software into the radiocommunication module (1), in addition to standard AT commands.

17. Radiocommunication module (1) according to any of claims 15 and 16, **characterised in that** said set of driver commands comprises an additional AT command called deactivate command, enabling the client external software to deactivate the client embedded software (6), in addition to standard AT commands.

18. Process for implementing a client software for driving a radiocommunication module (1), said radiocommunication module (1) being of the type hosting and executing a main software (3) that performs radiocommunication functions, said main software (3) comprising means of executing driver commands sent to the main software (3) by said client driver software and belonging to a predetermined set of driver commands,
**characterised in that** said radiocommunication module (1) hosts and executes at least one client software, called client embedded software (6),
and **in that** the client embedded software (6) and the main software (3) dialogue with each other such that the client embedded software (6) performs at least one of the following two roles:
- the role of said client driver software sending driver commands to the main software (3), and receiving responses from the main software (3) resulting from the execution of some of the driver commands;
- the role of a client supervision software, managing execution of driver commands sent by said client driver software, said client driver software called the client external software being hosted on and executed by a terminal equipment cooperating with the radiocommunication module (1).

## Patentansprüche

1. Funkkommunikationsmodul (1), von der Art, die eine Hauptsoftware (3), welche Funkkommunikationsfunktionen gewährleistet, aufnimmt und ausführt, wobei die besagte Hauptsoftware (3) über Mittel zum Ausführen von Steuerbefehlen verfügt, die an die Hauptsoftware (3) durch mindestens eine Steuer-Clientsoftware gesendet werden und welche darüber hinaus zu einem vorgegebenen Satz von Steuerbefehlen gehören,
**dadurch gekennzeichnet, dass** das besagte Funkkommunikationsmodul (1) so angepasst ist, das es darüber hinaus mindestens eine Clientsoftware aufnehmen und ausführen kann, welche mitgeführte Clientsoftware (6) genannt wird, und **dadurch**,
dass die mitgeführte Clientsoftware (6) und die Hauptsoftware (3) über Mittel verfügen, die es der mitgeführten Clientsoftware (6) ermöglichen, mindestens eine der zwei folgenden Rollen zu spielen:
- die Rolle einer Clientsteuersoftware, welche über Mittel zum Senden von Steuerbefehlen an die Hauptsoftware (3) verfügt und um von der Hauptsoftware (3) Antworten zu erhalten, die das Ergebnis der Ausführung bestimmter Steuerbefehle sind;
- die Rolle einer Überwachungsclientsoftware, welche über Mittel zum Verwalten der Ausführung von Steuerbefehlen verfügt, die von einer Clientsteuersoftware gesendet werden, welche externe Clientsoftware genannt wird und von einer dritten, mit dem Funkkommunikationsmodul (1) zusammenwirkenden Anlage aufgenommen und ausgeführt wird.

2. Funkkommunikationsmodul (1) nach Anspruch 1, **dadurch gekennzeichnet, dass**, um der mitgeführten Clientsoftware (6) das Spielen der Rolle einer Steuer-Clientsoftware zu ermöglichen:
- die mitgeführte Clientsoftware (6) über Mittel zum Senden von Steuerbefehlen an Mittel zum Ausführen verfügt, die in der Hauptsoftware (3) enthalten sind;
- die Hauptsoftware (3) über Mittel zum Senden von Antworten an die mitgeführte Clientsoftware (6) verfügt, welche sich aus der Ausführung bestimmter Steuerbefehle durch die in der Hauptsoftware (3) enthaltenen Ausführungsmittel ergeben;
- die mitgeführte Clientsoftware (6) über Mittel zum Bearbeiten der von ihr an die Hauptsoftware (3) gesendeten Antworten verfügt.

3. Funkkommunikationsmodul (1) nach einem der Ansprüche 1 oder 2,
**dadurch gekennzeichnet, dass**, um der mitgeführten Clientsoftware (6) das Spielen der Rolle einer Überwachungsclientsoftware zu ermöglichen:
- die Hauptsoftware (3) über Mittel zur Weichenstellung beim Weiterleiten von Befehlen als Funktion einer bestimmten Weichenstellungspolitik für das Weiterleiten der Befehle verfügt, um die von der externen Clientsoftware kommenden Steuerbefehle an die mitgeführte Clientsoftware (6) und/oder an die in der Hauptsoftware (3) befindlichen Ausführungsmittel weiterzuleiten;
- die mitgeführte Clientsoftware (6) über Mittel zum Verarbeiten der ihr von den besagten Mitteln zur Weichenstellung zugeleiteten Steuerbefehle verfügt;

4. Funkkommunikationsmodul (1) nach Anspruch 3, **dadurch gekennzeichnet, dass** die mitgeführte Clientsoftware (6) über Mittel verfügt, welche der von den besagten Mitteln zur Weichenstellung beim Weiterleiten von Befehlen angewandten Weichenstellungspolitik die Wahl ermöglichen, wobei die besagten Mittel zur Wahl für die Weichenstellungspolitik selbst über Mittel verfügen, um folgendes zu senden:
- die von der externen Clientsoftware kommenden Steuerbefehle, und zwar ausschließlich an die in der Hauptsoftware (3) befindlichen Mittel zum Ausführen;
- die von der externen Clientsoftware kommenden Steuerbefehle, und zwar ausschließlich an die mitgeführte Clientsoftware (6);
- die von der externen Clientsoftware kommenden Steuerbefehle an die in der Hauptsoftware (3) befindlichen Mittel zum Ausführen und an die mitgeführte Clientsoftware (6).

5. Funkkommunikationsmodul (1) nach einem der Ansprüche 3 oder 4, **dadurch gekennzeichnet, dass** die besagten Mittel zum Verarbeiten der Befehle über Entscheidungsmittel verfügen, welche es ermöglichen, für jeden Befehl mindestens eine Entscheidung aus der folgendes umfassenden Gruppe zu treffen:
- Senden des Steuerbefehls an die in der Hauptsoftware (3) befindlichen Mitteln zum Ausführen, wobei die mitgeführte Clientsoftware (6) zu diesem Zweck über Mittel zum Senden von Steuerbefehlen an die Mittel zum Ausführen verfügt;
- Bereitstellen oder nicht Bereitstellen einer Antwort, ausschließlich als Funktion von mindestens einer mit dem Befehl im Zusammenhang stehenden Information, ohne den Befehl auszuführen, wobei die mitgeführte Clientsoftware (6) zu diesem Zweck über Mittel zum Senden der Antwort an die externe Clientsoftware über die Hauptsoftware (3) verfügt.

6. Funkkommunikationsmodul (1) nach einem der Ansprüche 1 bis 5, **dadurch gekennzeichnet, dass**, um der mitgeführten Clientsoftware (6) das Spielen der Rolle einer Überwachungsclientsoftware zu ermöglichen:
- die Hauptsoftware (3) über Mittel zur Weichenstellung beim Weiterleiten von Antworten als Funktion einer bestimmten Weichenstellungspolitik für das Weiterleiten von Antworten verfügt, um Antworten, welche sich aus der Ausführung bestimmter Steuerbefehle durch die in der Hauptsoftware (3) befindlichen Mittel zum Ausführen an die mitgeführte Clientsoftware (6) und/oder an die externe Clientsoftware zu senden;
- die mitgeführte Clientsoftware (6) über Mittel zum Verarbeiten der ihr von den besagten Mitteln zur Weichenstellung beim Weiterleiten von Antworten zugeleiteten Antworten verfügt.

7. Funkkommunikationsmodul (1) nach Anspruch 6, **dadurch gekennzeichnet, dass** die mitgeführte Clientsoftware (6) über Mittel verfügt, welche der von den besagten Mitteln zur Weichenstellung beim Weiterleiten von Antworten angewandten Weichenstellungspolitik die Wahl ermöglichen, wobei die besagten Mittel zur Wahl für die Weichenstellungspolitik beim Weiterleiten von Befehlen selbst über Mittel verfügen, um folgendes zu senden:
- die von den Mitteln zum Ausführen kommenden Antworten, ausschließlich an die externe Clientsoftware;
- die von den Mitteln zum Ausführen kommenden Antworten, ausschließlich an die mitgeführte Clientsoftware (6);
- die von den Mitteln zum Ausführen kommenden Antworten an die mitgeführte Clientsoftware (6) und an die externe Clientsoftware.

8. Funkkommunikationsmodul (1) nach einem der Ansprüche 1 bis 7, **dadurch gekennzeichnet, dass** es in einer Vorrichtung aus der Gruppe enthalten ist, die folgendes umfasst:
- Funkkommunikationsterminals;
- andere Vorrichtungen, die keine Funkkommunikationsterminale sind und die eine drahtlose Kommunikationsfunktionalität benötigen;
- Modems.

9. Funkkommunikationsmodul (1) nach einem der Ansprüche 1 bis 7, **dadurch gekennzeichnet, dass** die besagte Hauptsoftware (3) eine Hauptanwendung (3a) umfasst, die auf einem Satz von Ausführungsfunktionen basiert, welche jeweils die Ausführung von mindestens einem der besagten Steuerungsbefehle ermöglicht,
**dadurch**, dass die besagte mitgeführte Clientsoftware (6) eine Clientanwendung (6a) umfasst, die insbesondere auf einem Satz von Quellenfunktionen basiert, von denen jede das Senden oder den Empfang zu oder von der Hauptanwendung (3a) von Steuerbefehlen oder von Antworten auf Steuerbefehle ermöglicht und **dadurch**,
dass die besagte Hauptsoftware (3) und/oder die besagte mitgeführte Clientsoftware (6) eine Schnittstellenanwendung (6b) umfasst (umfassen), welche die Schnittstellenbildung der besagten Quellenfunktionen mit den besagten Ausführungsfunktionen ermöglicht.

10. Funkkommunikationsmodul (1) nach einem der Ansprüche 1 bis 9, **dadurch gekennzeichnet, dass** die besagte mitgeführte Clientsoftware (6) eine Clientanwendung (6a) umfasst, die auf einem Satz von Quellenfunktionen basiert, von denen jede das Senden oder den Empfang zu oder von der Hauptsoftware (3) von Steuerbefehlen oder von Antworten auf Steuerbefehle ermöglicht und **dadurch**,
dass der besagte Satz von Quellenfunktionen insbesondere eine Funktion zur Verarbeitung einer Meldung umfasst, die von der Hauptsoftware (3) kommt, wobei ein Parameter der besagten Verarbeitungsfunktion die besagte Meldung ist.

11. Funkkommunikationsmodul (1) nach Anspruch 10, **dadurch gekennzeichnet, dass** die besagte, einen Parameter der besagten Verarbeitungsfunktion bildende Meldung eine Struktur aufweist, die folgendes umfasst:
- ein erstes Feld, welches eine Information bezüglich der Art der besagten Meldung enthält;
- ein zweites Feld, das den spezifischen Körper der besagten Meldung enthält.

12. Funkkommunikationsmodul (1) nach Anspruch 11, **dadurch gekennzeichnet, dass** die Art der besagten Meldung zur Gruppe gehört, die umfasst:
- Meldung, die eine Antwort auf einen vorher von der mitgeführten Clientsoftware (6) an die Hauptsoftware (3) gesendeten Steuerbefehl enthält;
- Meldung, die einen nicht angeforderten Steuerbefehl enthält;
- Meldung, die einen Steuerbefehl enthält, der von einer externen Clientsoftware über die Hauptsoftware (3) gesendet wurde;
- Meldung, die eine Antwort enthält, die ein Ergebnis der Ausführung eines Steuerbefehls durch die Hauptsoftware (3) ist;
- bei Ablauf einer Verweilzeit gesendete Meldung.

13. Funkkommunikationsmodul (1) nach einem der Ansprüche 10 bis 12,
**dadurch gekennzeichnet, dass** der besagte Satz von Quellenfunktionen ferner mindestens eine Funktion aufweist, die zur Gruppe gehört, die folgende Funktionen aufweist:
- eine Funktion zum Senden von mindestens einem Steuerbefehl an die Hauptsoftware (3), wobei ein erster Parameter der besagten Sendefunktion der besagte mindestens ein Steuerbefehl ist, wobei ein zweiter Parameter der besagten Sendefunktion die Empfängersoftware(s) der sich aus der Ausführung des besagten Steuerbefehls ergebenden Antwort angibt, nämlich die mitgeführte Clientsoftware (6) und/oder die externe Clientsoftware;
- eine Funktion zum Eintragen in einen Empfangsdienst für die nicht angeforderten Steuerbefehle bei der Hauptsoftware (3), wobei ein Parameter der besagten Eintragungsfunktion angibt, an welche Software(s) jeder der nicht angeforderten Steuerbefehle umgeleitet werden muss, nämlich an die mitgeführte Clientsoftware (6) und/oder an die externe Clientsoftware;
- eine Funktion zum Eintragen in einen Dienst zur Weichenstellung beim Weiterleiten von Steuerbefehlen bei der Hauptsoftware (3), wobei ein Parameter der besagten Eintragungsfunktion angibt, an welche Empfangssoftware(s) jeder der von der externen Clientsoftware kommenden Steuerbefehle umgeleitet werden muss, nämlich an die Hauptsoftware (3) und/oder an die mitgeführte Clientsoftware (6);
- eine Funktion zum Eintragen in einem Dienst zur Weichenstellung beim Weiterleiten von Antworten bei der Hauptsoftware (3), wobei ein Parameter der besagten Eintragungsfunktion angibt, an welche Empfangssoftware(s) jede der sich aus der Ausführung eines Steuerbefehls durch die Hauptsoftware (3) ergebende Antwort umgeleitet werden muss, nämlich an die externe Clientsoftware und/oder an die mitgeführte Clientsoftware (6);
- eine Sendefunktion an die externe Clientsoftware über die Hauptsoftware (3) von mindestens einer Antwort, wobei ein Parameter der besagten Sendefunktion die besagte mindestens eine Antwort ist.

14. Funkkommunikationsmodul (1) nach einem der Ansprüche 1 bis 13,
**dadurch gekennzeichnet, dass** die mitgeführte Clientsoftware (6) und die Hauptsoftware (3) jeweils einen anderen Teil eines selben Arbeitsspeichers benutzen, wobei der versuchte Zugang durch eine der Softwares zu einem, der anderen Software reservierten Teil des Arbeitsspeichers, eine Betriebsunterbrechung zur Folge hat.

15. Funkkommunikationsmodul (1) nach einem der Ansprüche 1 bis 14,
**dadurch gekennzeichnet, dass** es sich beim besagten Satz von Steuerbefehlen um einen Satz von standard AT-Befehlen handelt.

16. Funkkommunikationsmodul (1) nach Anspruch 15, **dadurch gekennzeichnet, dass** der besagte Satz von Steuerbefehlen neben den standard AT-Befehlen einen zusätzlichen, Ladebefehl einer Clientsoftware genannten AT-Befehl umfasst, welche es der externen Clientsoftware erlaubt, eine neue Clientsoftware in das Funkkommunikationsmodul (1) zu laden.

17. Funkkommunikationsmodul (1) nach einem der Ansprüche 15 oder 16,
**dadurch gekennzeichnet, dass** der besagte Satz von Steuerbefehlen neben den standard AT-Befehlen einen zusätzlichen, Deaktivierungsbefehl genannten AT-Befehl umfasst, welcher es der externen Clientsoftware ermöglicht, die mitgeführte Clientsoftware (6) zu deaktivieren.

18. Verfahren zum Einsetzen einer Clientsoftware zum Steuern eines Funkkommunikationsmoduls (1), wobei das besagte Funkkommunikationsmodul (1) von der Art ist, die eine Hauptsoftware (3) aufnimmt und ausführt, welche Funkkommunikationsfunktionen gewährleistet, wobei die besagte Hauptsoftware (3) über Mittel zum Ausführen von Steuerbefehlen verfügt, die an die Hauptsoftware (3) durch die besagte Clientsteuersoftware gesendet werden und einem vorgegebenen Satz von Steuerbefehlen angehören,
**dadurch gekennzeichnet, dass** das besagte Funkkommunikationsmodul (1) mindestens eine sogenannte mitgeführte Clientsoftware (6) aufnimmt und ausführt, und **dadurch**,
dass die mitgeführte Clientsoftware (6) und die Hauptsoftware (3) untereinander so im Dialog stehen, dass die mitgeführte Clientsoftware (6) mindestens eine der zwei folgenden Rollen spielt:
- die Rolle der besagten Clientsteuersoftware, welche Steuerbefehle an die Hauptsoftware (3) sendet und von der Hauptsoftware (3) Antworten empfängt, die sich aus der Ausführung bestimmter Steuerbefehle ergeben;
- die Rolle einer Überwachungsclientsoftware, welche die Ausführung von Steuerbefehlen verwaltet, die von der besagten Clientsteuersoftware gesendet wurden, wobei die besagte, auch externe Clientsoftware genannte Clientsteuersoftware durch eine dritte Anlage aufgenommen und ausgeführt wird, die mit dem Funkkommunikationsmodul (1) zusammenwirkt.
